(19) Europäisches Patentamt
European Patent Office
Office européen des brevets

(11) **EP 4 756 396 A1**

(12) **EUROPÄISCHE PATENTANMELDUNG**

(43) Veröffentlichungstag:
10.06.2026 Patentblatt 2026/24

(21) Anmeldenummer: 25217015.4

(22) Anmeldetag: **19.11.2025**

(51) Internationale Patentklassifikation (IPC):
*G01L 9/00* $^{(2006.01)}$  *G01L 9/08* $^{(2006.01)}$
*G01L 19/00* $^{(2006.01)}$  *G01L 19/04* $^{(2006.01)}$
*G01L 23/10* $^{(2006.01)}$

(52) Gemeinsame Patentklassifikation (CPC):
**G01L 9/008; G01L 9/085; G01L 19/0092;
G01L 19/04; G01L 23/10**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **06.12.2024 EP 24217960**

(71) Anmelder: **Kistler Holding AG**
**8408 Winterthur (CH)**

(72) Erfinder:
• **Pirouz, Sohi**
**8400 Winterthur (CH)**
• **Oldrati, Hanspeter**
**9545 Wängi (CH)**
• **Sommer, Roland**
**8413 Neftenbach (CH)**

(54) **SENSORVORRICHTUNG**

(57) Die Erfindung betrifft eine zur Messung eines Druckes (P) eingerichtete Sensorvorrichtung (1); mit mindestens einem Grundkörper (10) und mindestens einem Sensormaterial (20); welcher Grundkörper (10) bereichsweise als Grundkörpermembran (11) ausgeformt ist, welche Grundkörpermembran (11) eingerichtet ist, den zu messenden Druck (P) aufzunehmen und welche Grundkörpermembran (11) unter der Wirkung des Druckes (P) auslenkbar ist; wobei das Sensormaterial (20) bereichsweise auf der Grundkörpermembran (11) angeordnet ist, welches Sensormaterial (20) durch die Auslenkung der Grundkörpermembran (11) piezoelektrische Ladung (Q20+, Q20-) erzeugt und eine Menge der erzeugten piezoelektrischen Ladung (Q20+, Q20-) proportional zur Grösse des gemessenen Druckes (P) ist; wobei die Sensorvorrichtung (1) auch zur Messung einer Temperatur (T) eingerichtet ist und dafür mindestens einen elektrischen Leiter (40) aufweist, welcher elektrische Leiter (40) auf dem Grundkörper (10) angeordnet ist; und wobei die zu messende Temperatur (T) eine Widerstandsänderung (ΔR) des elektrischen Leiters (40) bewirkt, welche Widerstandsänderung (ΔR) proportional zur Grösse der gemessenen Temperatur (T) ist.

Fig. 1

EP 4 756 396 A1

**Beschreibung**

**Technisches Gebiet**

Die Erfindung betrifft eine Sensorvorrichtung gemäss dem Oberbegriff des unabhängigen Anspruches.

**Stand der Technik**

Sensorvorrichtungen sind bekannt. Sie werden vielfältig angewendet, um einen Druck, eine Temperatur, usw. zu messen.

So sind Sensorvorrichtungen bekannt, welche einen Druck nach dem piezoelektrischen Messprinzip messen. Dazu weisen sie piezoelektrisches Material wie Quarz ($SiO_2$), Galliumorthophosphat ($GaPO_4$), usw. auf, welches unter der Wirkung des zu messenden Druckes piezoelektrische Ladungen erzeugt. Die piezoelektrischen Ladungen werden auf Oberflächen des piezoelektrischen Materials erzeugt und mittels Elektroden abgegriffen. Die Menge der erzeugten piezoelektrischen Ladungen ist proportional zur Grösse des gemessenen Druckes.

Piezoelektrisches Material wie $SiO_2$ und $GaPO_4$ weist eine sehr hohe Profilsteifigkeit auf. Aufgrund dieser sehr hohen Profilsteifigkeit besitzen piezoelektrische Sensorvorrichtungen dann eine grosse Eigenfrequenz von mehr als 500 kHz. Durch diese grosse Eigenfrequenz sind piezoelektrische Sensorvorrichtungen für dynamische Messungen des Druckes prädestiniert. In der Regel liegt die maximale Messfrequenz bei 1/3 der Eigenfrequenz.

Solch eine piezoelektrische Sensorvorrichtung zur dynamischen Messung des Druckes wird von der Anmelderin unter der Bezeichnung Typ 603C vertrieben. Beim Typ 603C ist das piezoelektrische Material in Form von mehreren Scheiben in Axialrichtung gesehen, durch eine Bodenplatte von einer Membran beabstandet. Der zu messende Druck wirkt über die Membran und die Bodenplatte als Kraft auf das piezoelektrische Material. Da das piezoelektrische Material wie $SiO_2$ und $GaPO_4$ spröde ist und unter lokalen Druckspitzen brechen kann, stellt die Bodenplatte eine gleichmässige Verteilung des Druckes auf das piezoelektrische Material sicher. Die maximale Messfrequenz des Typ 603C liegt bei rund 200 kHz. Die technische Spezifikation des Typs 603C ist im Datenblatt 603C_003-288e-11.22 dokumentiert.

Nun ist es Wunsch der Anwender von Sensorvorrichtungen zur Messung des Druckes, die Messfrequenz weiter zu erhöhen.

Aufgabe der vorliegenden Erfindung ist es, eine Sensorvorrichtung bereitzustellen, welche für die Messung des Druckes eine Messfrequenz von deutlich mehr als 200 kHz aufweist.

**Darstellung der Erfindung**

Diese Aufgabe wird durch die Merkmale des unabhängigen Anspruches gelöst.

Die Erfindung betrifft eine zur Messung eines Druckes eingerichtete Sensorvorrichtung; mit mindestens einem Grundkörper und mindestens einem Sensormaterial; welcher Grundkörper bereichsweise als Grundkörpermembran ausgeformt ist, welche Grundkörpermembran eingerichtet ist, den zu messenden Druck aufzunehmen und welche Grundkörpermembran unter der Wirkung des Druckes auslenkbar ist; wobei das Sensormaterial bereichsweise auf der Grundkörpermembran angeordnet ist, welches Sensormaterial durch die Auslenkung der Grundkörpermembran piezoelektrische Ladung erzeugt und eine Menge der erzeugten piezoelektrischen Ladung proportional zur Grösse des gemessenen Druckes ist; wobei die Sensorvorrichtung auch zur Messung einer Temperatur eingerichtet ist und dafür mindestens einen elektrischen Leiter aufweist, welcher elektrische Leiter auf dem Grundkörper angeordnet ist; und wobei die zu messende Temperatur eine Widerstandsänderung des elektrischen Leiters bewirkt, welche Widerstandsänderung proportional zur Grösse der gemessenen Temperatur ist.

Vorteilhafte Weiterbildungen der Erfindung sind in den abhängigen Ansprüchen geschützt.

**Kurze Beschreibung der Zeichnungen**

Im Folgenden wird die Erfindung beispielhaft unter Beizug der Figuren näher erklärt. Es zeigen

Fig. 1    eine Draufsicht eines Teils einer ersten Ausführungsform einer Sensorvorrichtung 1 mit einem Drucksensor 1P zur Messung eines Druckes P und mit einem Temperatursensor 1T zur Messung einer Temperatur T;

Fig. 2    einen Querschnitt eines Teils der Sensorvorrichtung 1 gemäss Fig. 1 entlang eines Schnittverlaufes A - A;

Fig. 3    einen Querschnitt eines Teils der Sensorvorrichtung 1 gemäss Fig. 1 entlang eines Schnittverlaufes B - B;

Fig. 4    eine Draufsicht eines Teils einer zweiten Ausführungsform einer Sensorvorrichtung 1 mit einem Drucksensor 1P zur Messung eines Druckes P, mit einem Temperatursensor 1T zur Messung einer Temperatur T und mit einem Kompensator 1K;

Fig. 5     einen Querschnitt eines Teils der Sensorvorrichtung 1 gemäss Fig. 5 entlang eines Schnittverlaufes C - C;

Fig. 6     einen Querschnitt eines Teils der Sensorvorrichtung 1 gemäss Fig. 5 entlang eines Schnittverlaufes D - D;

Fig. 7     eine Draufsicht eines Teils einer dritten Ausführungsform einer Sensorvorrichtung 1 mit einer Gruppe von Drucksensoren 1P und mit einem Temperatursensor 1T gemäss Fig. 1 bis 3;

Fig. 8     eine Draufsicht eines Teils einer vierten Ausführungsform einer Sensorvorrichtung 1 mit einer Gruppe von Drucksensoren 1P, mit einem Temperatursensor 1T und mit einer Gruppe von Kompensatoren 1K gemäss Fig. 4 bis 6;

Fig. 9     eine Kurve der Erzeugung von pyroelektrischer Ladung P20+, P30+, P20-, P30- unter der Wirkung einer Temperaturänderung $\Delta T$ der Sensorvorrichtung 1 gemäss Fig. 4 bis 6 und 8;

Fig. 10     eine temperaturabhängige nichtlineare Kurve Empfindlichkeit $\sigma$ der Sensorvorrichtung 1 mit einem Drucksensor 1P gemäss Fig. 1, 2, 4, 5, 7 und 8;

Fig. 11     einen schematischen Schaltplan eines Teils der ersten Ausführungsformen der Sensorvorrichtung 1 mit einem Drucksensor 1P gemäss Fig. 1 und 2, mit einer Ableitung 5, mit einer Wandlereinheit 6 und mit einer Auswerteeinheit 7;

Fig. 12     einen schematischen Schaltplan eines Teils der Ausführungsformen der Sensorvorrichtung 1 mit einem Temperatursensor 1T gemäss Fig. 1, 3, 4, 6, 7 und 8, mit einer Ableitung 5, mit einer Wandlereinheit 6 und mit einer Auswerteeinheit 7;

Fig. 13     einen schematischen Schaltplan eines Teils der zweiten Ausführungsform der Sensorvorrichtung 1 mit einem Drucksensor 1P und mit einem Kompensator 1K gemäss Fig. 4 und 5, mit einer Ableitung 5, mit einer Wandlereinheit 6 und mit einer Auswerteeinheit 7;

Fig. 14     einen schematischen Schaltplan eines Teils der dritten Ausführungsform der Sensorvorrichtung 1 mit einer Gruppe von Drucksensoren 1P gemäss Fig. 7, mit einer Ableitung 5, mit einer Wandlereinheit 6 und mit einer Auswerteeinheit 7; und

Fig. 15     einen schematischen Schaltplan eines Teils der vierten Ausführungsform der Sensorvorrichtung 1 mit einer Gruppe von Drucksensoren 1P und mit einer Gruppe von Kompensatoren 1K gemäss Fig. 8, mit einer Ableitung 5, mit einer Wandlereinheit 6 und mit einer Auswerteeinheit 7.

Gleiche Bezugszeichen bezeichnen in den Figuren gleiche Gegenstände.

**Wege zur Ausführung der Erfindung**

Die Sensorvorrichtung 1 hat die Funktion einen Druck P und eine Temperatur T zu messen.

Gemäss der ersten bis vierten Ausführungsform weist die Sensorvorrichtung 1 mindestens einen Drucksensor 1P zur Messung des Druckes P und mindestens einen Temperatursensor 1T zur Messung der Temperatur T auf. Gemäss der zweiten und vierten Ausführungsform weist die Sensorvorrichtung 1 zudem mindestens einen Kompensator 1K auf.

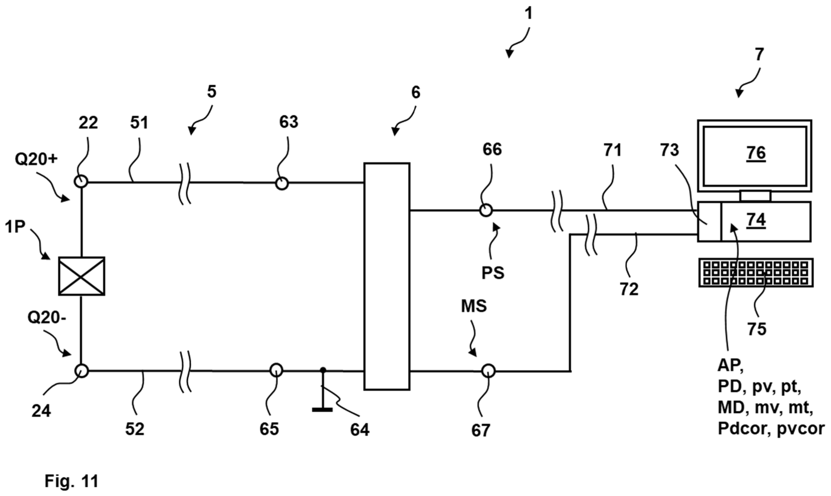

Weiter weist die Sensorvorrichtung 1 gemäss den Fig. 11 bis 15 mindestens eine Ableitung 5, mindestens einen Wandlereinheit 6 und mindestens eine Auswerteeinheit 7 auf.

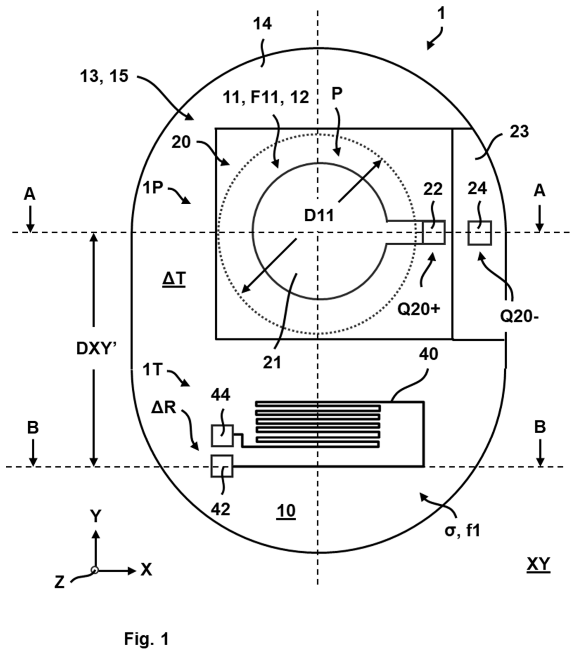

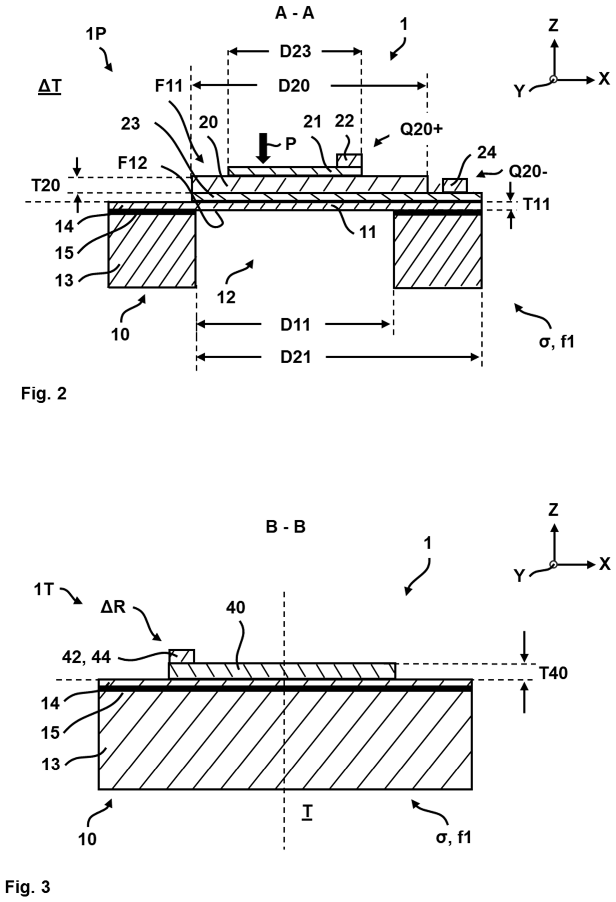

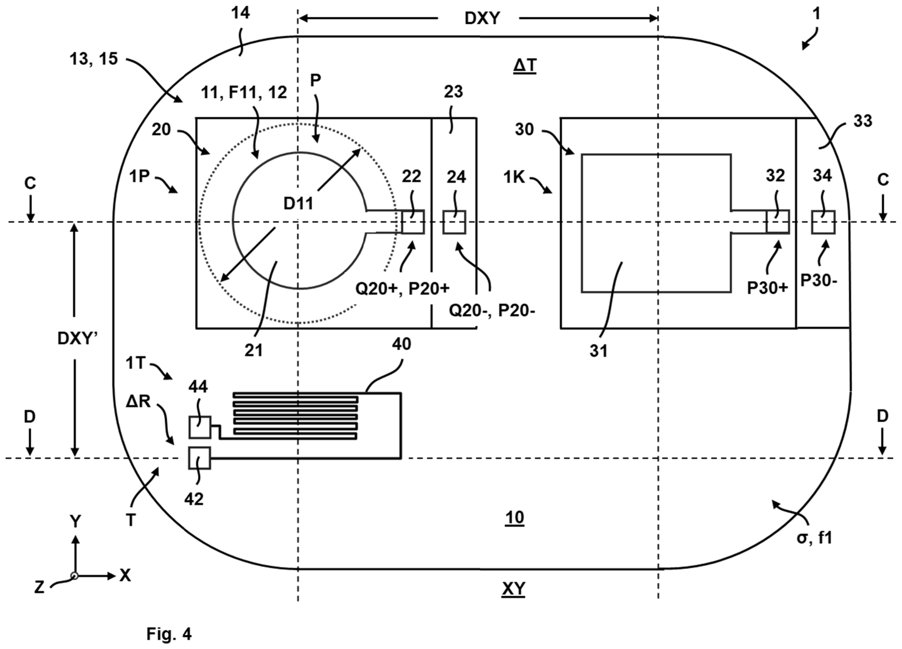

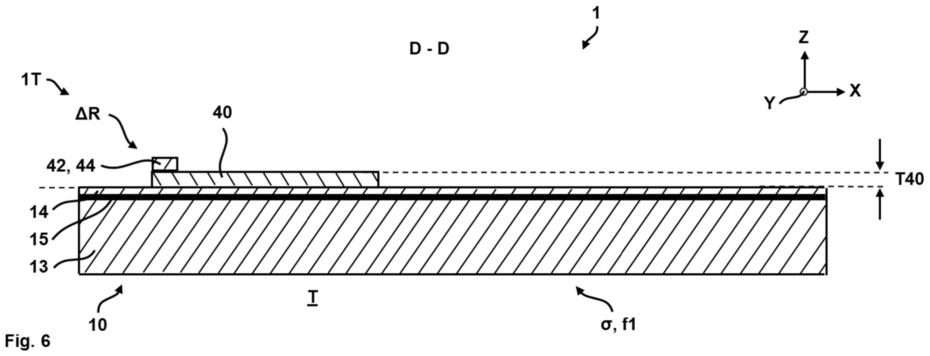

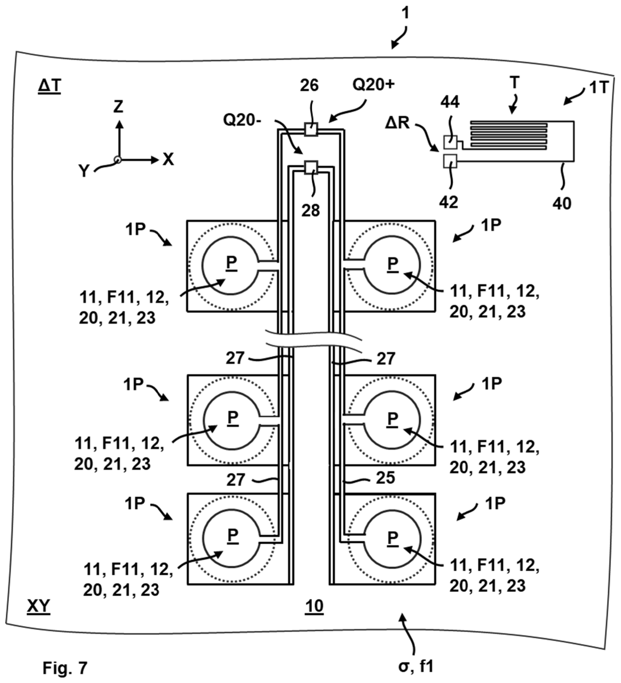

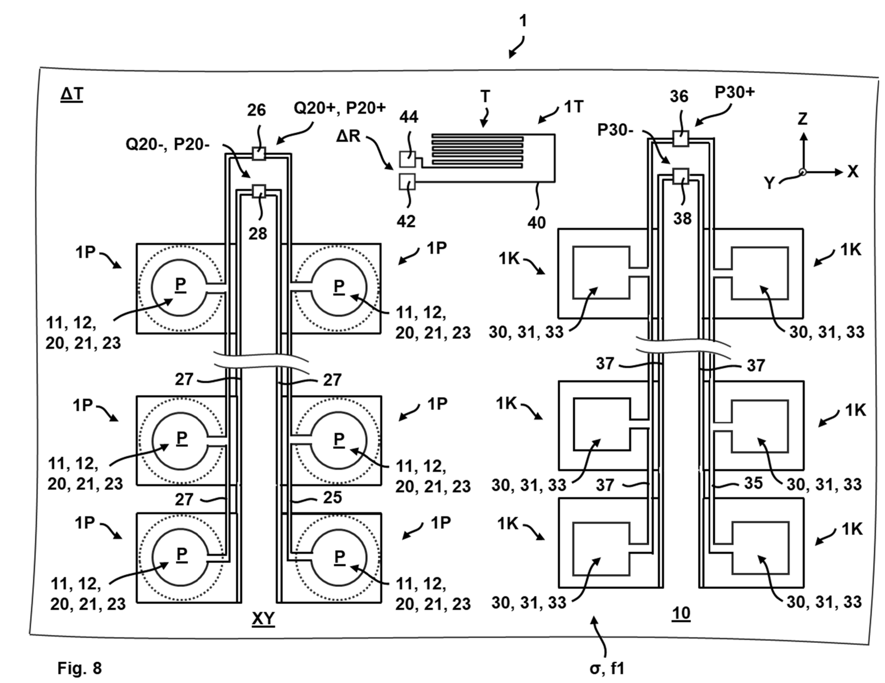

In den Fig. 1 bis 8 ist die Sensorvorrichtung 1 in einem dreidimensionalen Koordinatensystem mit einer Horizontalachse X, einer Schrägachse Y und einer Vertikalachse Z dargestellt. Die drei Achsen X, Y, Z stehen senkrecht aufeinander. Die Horizontalachse X und die Schrägachse Y spannen eine Horizontalebene XY auf. Die Fig. 1, 4, 7 und 8 zeigen Ausführungsformen der Sensorvorrichtung 1 in Draufsicht in der Horizontalebene XY. Die Fig. 2, 3, 5 und 6 zeigen die Sensorvorrichtung 1 im Querschnitt.

DER GRUNDKÖRPER 10

Die Sensorvorrichtung 1 weist mindestens einen Grundkörper 10 auf. Der Grundkörper 10 hat die Funktion, den zu messenden Druck P aufzunehmen.

Der Grundkörper 10 besteht aus elektrisch isolierendem Material wie Silizium, Glas, usw. Silizium hat bei Raumtemperatur (20 °C) einen spezifischen elektrischen Widerstand von grösser/gleich $10^7$ Ωm. Glas hat bei 20° C einen spezifischen elektrischen Widerstand von grösser/gleich $10^{11}$ Ωm.

Der Grundkörper 10 weist eine Vorderseite und eine Rückseite auf. Auf der Vorderseite bildet der Grundkörper 10 eine Tragfläche aus. Die Tragfläche liegt in der Horizontalebene XY. Die Tragfläche ist kleiner/gleich 3 mm * 3 mm, vorzugsweise kleiner/gleich 2 mm * 2 mm. Auf der Rückseite bildet der Grundkörper 10 eine Grundkörperöffnung 12 aus.

Vorzugsweise ist der Grundkörper 10 ein Silicon-On-Insulator (SOI) mit den folgenden funktionellen Schichten:

- Eine Tragschicht 13 besteht aus Silizium und weist entlang der Vertikalachse Z eine Dicke im Bereich 200 bis 500 μm, vorzugsweise weist sie eine Dicke von 400 μm auf. Die Tragschicht 13 hat eine Tragfunktion für Komponenten der Sensorvorrichtung 1.

- Eine Grenzschicht 14 aus Silizium weist entlang der Vertikalachse Z eine Dicke im Bereich von 100 bis 2 μm, vorzugsweise weist sie eine Dicke von 50 μm auf, vorzugsweise weist sie eine Dicke von 5 μm auf. Die Grenzschicht 14 hat die Funktion, bereichsweise eine Grundkörpermembran 11 zu bilden. Die Grenzschicht 14 begrenzt den Grundkörper 10 in der Horizontalebene XY.

- Eine Stoppschicht 15 weist entlang der Vertikalachse Z eine Dicke von 1 μm Dicke auf und ist entlang der Vertikalachse Z zwischen der Tragschicht 13 und der Grenzschicht 14 angeordnet. Die Stoppschicht 15 besteht aus einem Oxidmaterial und hat bei 20° C einen spezifischen elektrischen Widerstand von grösser/gleich $10^{12}$ Ωm. Die Stoppschicht 15 hat deshalb die Funktion, die Grenzschicht 14 elektrisch gegenüber der Tragschicht 13 zu isolieren. Die Stoppschicht 15 hat die weitere Funktion eines Ätzstopps bei der Herstellung der Grundkörperöffnung 12 durch chemisches Ätzen im Grundkörper 10. Dabei wird auf der Rückseite des Grundkörpers 10 Silizium entlang der Vertikalachse Z bis zur Stoppschicht 15 weggeätzt.

Die Grundkörpermembran 11 ist eingerichtet, den zu messende Druck P aufzunehmen. Die Grundkörpermembran 11 weist zwei Oberflächen F11, F12 auf. Die zwei Oberflächen F11, F12 umfassen eine vordere Oberfläche F11 und eine hintere Oberfläche F12. Die vordere Oberfläche F11 liegt auf der Vorderseite des Grundkörpers 10 in der Horizontalebene XY. Der Druck P wirkt entlang der Vertikalachse Z auf die vordere Oberfläche F11. Die vordere Oberfläche F11 ist der Richtung, in der der Druck P wirkt, zugewandt. Die hintere Oberfläche der Grundkörpermembran 11 begrenzt auf der Rückseite des Grundkörpers 10 die Grundkörperöffnung 12. Unter der Wirkung des Druckes P ist die Grundkörpermembran 11 entlang der Vertikalachse Z in die Grundkörperöffnung 12 auslenkbar.

Die Grundkörpermembran 11 weist eine Dicke T11 kleiner/gleich 20 μm, vorzugsweise kleiner/gleich 10 μm, vorzugsweise kleiner/gleich 5 μm auf. Die Grundkörpermembran 11 weist einen Durchmesser D11 kleiner/gleich 300 μm, vorzugsweise kleiner/gleich 200 μm, vorzugsweise kleiner/gleich 100 μm auf. Das Verhältnis von Dicke T11 zu Durchmesser D11 der Grundkörpermembran 11 ist so gewählt, dass die Sensorvorrichtung 1 eine Eigenfrequenz f1 von grösser/gleich 1 MHz aufweist. Vorteilhafterweise ist das Verhältnis von Dicke T11 zu Durchmesser D11 der Grundkörpermembran 11 im Bereich von $1.7 \cdot 10^{-2}$ bis $5.0 \cdot 10^{-2}$. Beispielhafte Verhältnisse von Dicke T11 zu Durchmesser D11 der Grundkörpermembran 11 führen zu den folgenden Eigenfrequenzen f1:

- Für eine Dicke T11 der Grundkörpermembran 11 gleich 5 μm und einen Durchmesser D11 der Grundkörpermembran 11 gleich 300 μm resultieren ein Verhältnis von Dicke T11 zu Durchmesser D11 der Grundkörpermembran 11 gleich $1.7 \cdot 10^{-2}$ und eine Eigenfrequenz f1 von grösser 1 MHz.

- Für eine Dicke T11 der Grundkörpermembran 11 gleich 5 μm und einen Durchmesser D11 der Grundkörpermembran 11 gleich 200 μm resultieren ein Verhältnis von Dicke T11 zu Durchmesser D11 der Grundkörpermembran 11 gleich $2.5 \cdot 10^{-2}$ und eine Eigenfrequenz f1 von grösser 2.5 MHz.

- Für eine Dicke T11 der Grundkörpermembran 11 gleich 5 μm und einen Durchmesser D11 der Grundkörpermembran 11 gleich 100 μm resultieren ein Verhältnis von Dicke T11 zu Durchmesser D11 der Grundkörpermembran 11 gleich $5.0 \cdot 10^{-2}$ und eine Eigenfrequenz f1 von grösser 10 MHz.

Im Unterschied zur piezoelektrischen Sensorvorrichtung des Typs 603C, welche eine metallische Membran aus dem Edelstahl 17-4PH aufweist, besteht die erfindungsgemässe Grundkörpermembran 11 aus Silizium. Im Vergleich zum Edelstahl 17-4PH, welcher eine Dichte von 7.8 g/cm³ aufweist, weist Silizium eine Dichte von und 2.3 g/cm³ auf. Somit ist die erfindungsgemässe Grundkörpermembran 11 mehr als dreimal leichter, was die Eigenfrequenz f1 der Sensorvorrichtung 1 weiter erhöht.

DAS SENSORMATERIAL 20

Die Sensorvorrichtung 1 weist mindestens ein Sensormaterial 20 auf. Das Sensormaterial 20 hat die Funktion, für den zu messenden Druck P einen Messwert zu erzeugen.

Das Sensormaterial 20 ist piezoelektrisch und besteht aus Quarz ($SiO_2$), Galliumorthophosphat ($GaPO_4$), CalciumGalloGermanat ($Ca_3Ga_2Ge_4O_{14}$ oder CGG), Langasit ($La_3Ga_5SiO_{14}$ oder LGS), Turmalin, Aluminiumnitrid (AlN), Blei-Zirkonat-Titanate (PZT), Aluminiumscandiumnitrid (Al(1-x)Sc(x)N mit x=0...0.4), Kalium-Natrium-Niobat (K(x)Na(1-x)NbO3 mit x=0.2...0.5), usw.

Das Sensormaterial 20 ist auf dem Grundkörper 10 angeordnet. Vorzugsweise ist das Sensormaterial 20 auf der Vorderseite des Grundkörpers 10 in mindestens einem Bereich der Grundkörpermembran 11 angeordnet.

Vorzugsweise ist das Sensormaterial 20 bereichsweise auf der vorderen Oberfläche F11 der Grundkörpermembran 11 angeordnet. Das Sensormaterial 20 bildet eine sich in der Horizontalebene XY erstreckende Schicht. In der Horizontalebene XY weist das Sensormaterial 20 eine Grundfläche D20 auf. Die Grundfläche D20 ist grösser/gleich dem Durchmesser D11 der Grundkörpermembran 11. Entlang der Vertikalachse Z weist das Sensormaterial 20 eine konstante Dicke T20 auf. Die Dicke T20 ist kleiner/gleich 10 μm, vorzugsweise ist die Dicke T20 kleiner/gleich 5 μm, vorzugsweise ist die Dicke T20 kleiner/gleich 1 μm.

Bei der piezoelektrischen Sensorvorrichtung des Typs 603C liegt das Sensormaterial in Form von drei Scheiben von jeweils 0.2 mm Dicke und 3.5 mm Durchmesser vor. Die Scheiben sind in Axialrichtung gesehen, durch eine metallische Bodenplatte von 0.6 mm Dicke und 3.5 mm Durchmesser von der Membran beabstandet angeordnet. Im weiteren Unterschied zur piezoelektrischen Sensorvorrichtung des Typs 603 ist das Sensormaterial 20 erfindungsgemäss als dünne Schicht auf der Grundkörpermembran 11 angeordnet. Die Dicke T20 der dünnen Schicht ist kleiner/gleich 10 μm. Somit liegen keine Scheiben mit Sensormaterial vor, und auch die metallische Bodenplatte fällt weg, wodurch das Gewicht der erfindungsgemässen Sensorvorrichtung 1 sinkt. Und da die Eigenfrequenz f1 umgekehrt proportional zum Gewicht der Sensorvorrichtung 1 ist, erhöht sich durch das Fehlen der Scheiben mit Sensormaterial und der metallischen Bodenplatte die Eigenfrequenz f1 der Sensorvorrichtung 1.

Unter der Wirkung des zu messenden Druckes P erzeugt das Sensormaterial 20 als Messwert piezoelektrische Ladung Q20+, Q20-. Der Druck P wirkt entlang der Vertikalachse Z einseitig auf die vordere Oberfläche F11 der Grundkörpermembran 11 und lenkt die Grundkörpermembran 11 aus. In Fig. 2 ist der Druck P schematisch als Pfeil dargestellt. Durch die Auslenkung der Grundkörpermembran 11 erzeugt das piezoelektrische Material 20 piezoelektrische Ladung Q20+, Q20-. Die Menge der erzeugten piezoelektrischen Ladung Q20+, Q20- ist proportional zur Grösse des gemessenen Druckes P. Die dauerhafte Einsatztemperatur des Sensormaterials 20 liegt im Bereich von -40 °C bis +500 °C.

Die piezoelektrische Ladung Q20+, Q20- wird auf mehreren Oberflächen des Sensormaterials 20 erzeugt, welche Oberflächen parallel zur Horizontalebene XY verlaufen. Die piezoelektrische Ladung Q20+, Q20- umfasst erste piezoelektrische Ladung Q20+ und zweite piezoelektrische Ladung Q20-. Im Querschnitt der Fig. 2 wird erste piezoelektrische Ladung Q20+ auf einer von der Grundkörpermembran 11 abgewandten Oberfläche des Sensormaterials 20 erzeugt und zweite piezoelektrische Ladung Q20- wird auf einer der Grundkörpermembran 11 zugewandten Oberfläche des Sensormaterials 20 erzeugt. Gemäss der nachfolgenden Beschreibung wird die erste piezoelektrische Ladung Q20+ vorzugsweise in ein Drucksignal PS gewandelt, während die zweite piezoelektrische Ladung Q20- vorzugsweise Verwendung als erstes Massepotentialsignal MS findet.

Der Empfindlichkeit σ der Sensorvorrichtung 1 kommt eine grosse Bedeutung zu. Die Empfindlichkeit σ ist das Verhältnis von Messwert zu Eingangsgrösse des zu messenden Druckes P. Die Empfindlichkeit σ fällt kubisch mit dem Anstieg der Dicke T11 der Grundkörpermembran 11. Und sie fällt quadratisch mit der Abnahme des Durchmessers D11 der Grundkörpermembran 11. Somit nimmt die Empfindlichkeit σ der Sensorvorrichtung 1 mit dem Anstieg des Verhältnisses von Dicke T11 zu Durchmesser D11 der Grundkörpermembran 11 ab.

- Für eine Dicke T11 der Grundkörpermembran 11 gleich 5 μm und einen Durchmesser D11 der Grundkörpermembran 11 gleich 300 μm und einem daraus resultierenden Verhältnis von Dicke T11 zu Durchmesser D11 der Grundkörpermembran 11 gleich 1.7 10⁻² folgt eine Empfindlichkeit σ der Sensorrichtung 1 von rund 5 pC/bar.

- Für eine Dicke T11 der Grundkörpermembran 11 gleich 5 μm und einen Durchmesser D11 der Grundkörpermembran 11 gleich 200 μm und einem daraus resultierenden Verhältnis von Dicke T11 zu Durchmesser D11 der Grundkörpermembran 11 gleich 2.5 10⁻² folgt eine Empfindlichkeit σ der Sensorrichtung 1 von rund 0.5 pC/bar.

- Für eine Dicke T11 der Grundkörpermembran 11 gleich 5 $\mu$m und einen Durchmesser D11 der Grundkörpermembran 11 gleich 100 $\mu$m und einem daraus resultierenden Verhältnis von Dicke T11 zu Durchmesser D11 der Grundkörpermembran 11 gleich 5.0 $10^{-2}$ folgt eine Empfindlichkeit $\sigma$ der Sensorrichtung 1 von rund 0.05 pC/bar.

DAS KOMPENSATORMATERIAL 30

Gemäss der zweiten und vierten Ausführungsform weist die Sensorvorrichtung 1 mindestens ein Kompensatormaterial 30 auf. Das Kompensatormaterial 30 hat die Funktion, den pyroelektrischen Effekt des Sensormaterials 20 der Sensorvorrichtung 1 zu kompensieren.

Bestimmtes Sensormaterial 20 wie CGG, LGS, Turmalin, AlN, PZT, usw. weist den direkten und/oder den indirekten pyroelektrischen Effekt auf, wonach eine Temperaturänderung $\Delta$T zur Erzeugung von pyroelektrischer Ladung P20+, P20-führt. Die Erzeugung der pyroelektrischen Ladung P20+, P20-erfolgt beim Sensormaterial 20 auf den gleichen Oberflächen wie die Erzeugung der piezoelektrischen Ladung Q20+, Q20-. Die Messung des Druckes P wird also durch jede Temperaturänderung $\Delta$T verfälscht. In der zweiten und vierten Ausführungsform der Sensorvorrichtung 1 weist das Sensormaterial 20 den pyroelektrischen Effekt auf.

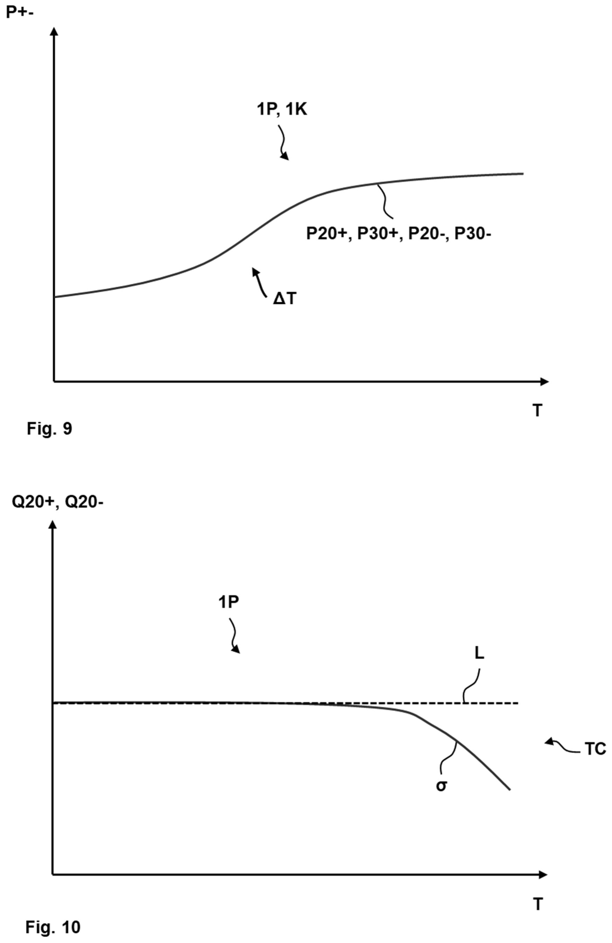

Das Kompensatormaterial 30 besteht dann vorzugsweise aus dem gleichen CGS, LGS, Turmalin, AlN, PZT, usw. wie das Sensormaterial 20. Die Fig. 9 zeigt eine Kurve der Erzeugung von pyroelektrischer Ladung P20+, P30+, P20-, P30- mit der Temperaturänderung $\Delta$T. Auf der Abszisse ist die Temperatur T über den Bereich der dauerhaften Einsatztemperatur des Sensormaterials 20 und des Kompensatormaterials 30 von -40 °C bis +500 °C aufgetragen. Die Ordinate gibt die pyroelektrische Ladung P+- wieder. Die Menge der erzeugten pyroelektrischen Ladung P20+, P30+, P20-, P30- ist proportional zur Grösse der Grundfläche D20 des Sensormaterials 20 und zur Grösse einer Grundfläche D30 des Kompensatormaterials 30. Für eine Temperaturänderung $\Delta$T ist die Kurve der Erzeugung von pyroelektrischer Ladung P20+, P30+, P20-, P30- beispielsweise S-förmig. Die Steigung der Kurve gibt die Empfindlichkeit des Sensormaterials 20 und des Kompensatormaterials 30 für den pyroelektrischen Effekt wieder. Diese Empfindlichkeit liegt im Bereich von 0.1 pC/°C bis 0.5 pC/°C.

Das Kompensatormaterial 30 ist auf dem Grundkörper 10 angeordnet. Vorzugsweise ist das Kompensatormaterial 30 in mindestens einem Bereich auf der Vorderseite des Grundkörpers 10 angeordnet. Vorzugsweise ist das Kompensatormaterial 30 ausserhalb der Grundkörpermembran 11 angeordnet. Das Kompensatormaterial 30 bildet eine sich in der Horizontalebene XY erstreckende Schicht. In der Horizontalebene XY weist das Kompensatormaterial 30 die Grundfläche D30 auf. Vorzugsweise ist die Grundfläche D30 gleich gross wie die Grundfläche D20 des Sensormaterials 20. Entlang der Vertikalachse Z weist das Kompensatormaterial 30 eine konstante Dicke T30 auf. Vorzugsweise ist die Dicke T30 des Kompensatormaterials 30 ist gleich gross wie die Dicke T20 des Sensormaterials 20. Die Dicke T30 ist kleiner/gleich 10 $\mu$m, vorzugsweise ist die Dicke T30 kleiner/gleich 5 $\mu$m, vorzugsweise ist die Dicke T30 kleiner/gleich 1 $\mu$m.

Dadurch, dass das Kompensatormaterial 30 ausserhalb der Grundkörpermembran 11 angeordnet ist, kann der zu messende Druck P nicht auf das Kompensatormaterial 30 wirken, denn der Grundkörper 10 erfährt durch die Einwirkung des Druckes P keine Auslenkung und somit erzeugt das Kompensatormaterial 30 keine piezoelektrische Ladung als Messwert. Vorzugsweise sind das Sensormaterial 20 und das Kompensatormaterial 30 identisch aufgebaut. Vorzugsweise ist die Grösse der Grundfläche D20 des Sensormaterials 20 gleich der Grösse der Grundfläche D30 des Kompensatormaterials 30. Vorzugsweise ist das Verhältnis der Grösse der Grundfläche D20 des Sensormaterials 20 zur Grösse der Grundfläche D30 des Kompensatormaterials 30 bekannt.

Genau wie beim Sensormaterial 20, welches die pyroelektrische Ladung P20+, P20- auf mehreren parallel zur Horizontalebene XY verlaufenden Oberflächen erzeugt, erzeugt auch das Kompensatormaterial 30 die pyroelektrische Ladung P30+, P30- auf mehreren parallel zur Horizontalebene XY verlaufenden Oberflächen. Die pyroelektrische Ladung P20+, P30+, P20-, P30- umfasst erste pyroelektrische Ladung P20+, P30+ und zweite pyroelektrische Ladung P20-, P30-. Im Querschnitt der Fig. 2 wird beim Sensormaterial 20 erste pyroelektrische Ladung P20+ auf der von der Grundkörpermembran 11 abgewandten Oberfläche des Sensormaterials 20 erzeugt und zweite pyroelektrische Ladung P20- wird auf der der Grundkörpermembran 11 zugewandten Oberfläche des Sensormaterials 20 erzeugt. Beim Kompensatormaterial 30 wird erste pyroelektrische Ladung P30+ auf einer vom Grundkörper 10 abgewandten Oberfläche des Kompensatormaterials 30 erzeugt und zweite pyroelektrische Ladung P30- wird auf einer dem Grundkörper 10 zugewandten Oberfläche des Kompensatormaterials 30 erzeugt.

DER DRUCKSENSOR 1P

Die Sensorvorrichtung 1 weist mehrere Sensorelektroden 21, 23 auf. Die Sensorelektroden 21, 23 haben die Funktion, die piezoelektrische Ladung Q20+, Q20- von den Oberflächen des Sensormaterials 20 abzugreifen.

Die Sensorelektroden 21, 23 sind im Bereich der Oberflächen des Sensormaterials 20 angeordnet, wo piezoelektrische Ladung Q20+, Q20- erzeugt wird. Die Sensorelektroden 21, 23 umfassen eine erste Sensorelektrode 21 und eine zweite Sensorelektrode 23. Die Sensorelektroden 21, 23 bestehen aus elektrisch leitfähigem Material wie Silber (Ag), Gold (Au), Platin (Pt), usw.

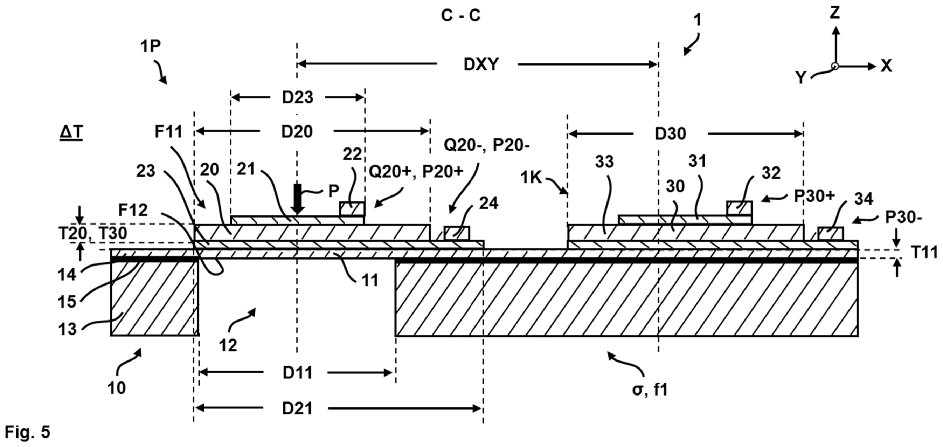

Im Querschnitt der Fig. 2 und 5 ist die erste Sensorelektrode 21 auf der von der Grundkörpermembran 11 abgewandten Oberfläche des Sensormaterials 20 angeordnet und greift erste piezoelektrische Ladung Q20+ ab. Die zweite Sensorelektrode 23 ist auf der der Grundkörpermembran 11 zugewandten Oberfläche des Sensormaterials 20 angeordnet und greift zweite piezoelektrische Ladung Q20- ab. Jede der beiden Sensorelektroden 21, 23 bildet eine sich parallel zur Horizontalebene XY erstreckende Schicht. Parallel zur Horizontalebene XY weist die erste Sensorelektrode 21 eine erste Sensorgrundfläche D21 und die zweite Sensorelektrode 23 weist eine zweite Sensorgrundfläche D23 auf. Entlang der Vertikalachse Z weist jede der beiden Sensorelektroden 21, 23 eine konstante Dicke von kleiner/gleich 200 nm auf.

Im Vergleich zur piezoelektrischen Sensorvorrichtung des Typs 603C, deren Membran einem Durchmesser von 5.5 mm aufweist, ist die erfindungsgemässe Grundkörpermembran 11 um rund eine Grössenordnung kleiner. Die Grundkörpermembran 11 ist miniaturisiert. Auf der Oberfläche der Membran des Typs 603C haben mehr als hundert erfindungsgemässe Grundkörpermembrane 11 Platz. Die Grundkörpermembran 11, das auf ihr angeordnete Sensormaterial 20 und die auf den Oberflächen des Sensormaterials 20 angeordneten Sensorelektroden 21, 23 bilden einen miniaturisierten Drucksensor 1P, welcher nicht nur für den zu messenden Druck P piezoelektrische Ladung Q20+, Q20- erzeugt, sondern der auch Sensorelektroden 21, 23 aufweist, um diese piezoelektrische Ladung Q20+, Q20- von den Oberflächen des Sensormaterials 20 abzugreifen.

Die Profilsteifigkeit der Grundkörpermembran 11 ist über ihren Durchmesser D11 hinweg nicht konstant. In einem mittleren Bereich der Grundkörpermembran 11 entlang der Vertikalrichtung Z ist die Profilsteifigkeit konstant, doch in einem Randbereich im Übergang zur Stoppschicht 15 und zur Tragschicht 13 nimmt die Profilsteifigkeit zu. Mit der Zunahme der Profilsteifigkeit im Randbereich der Grundkörpermembran 11 nimmt dort die Empfindlichkeit σ der Sensorvorrichtung 1 und somit auch die Erzeugung von piezoelektrischer Ladung Q20+, Q20- ab. Diese Abnahme der Empfindlichkeit σ der Sensorvorrichtung 1 im Randbereich der Grundkörpermembran 11 verfälscht die Messung des Druckes P. Zur Vermeidung der Abnahme der Empfindlichkeit σ der Sensorvorrichtung 1 im Randbereich der Grundkörpermembran 11, wird dort vorzugsweise überhaupt keine erste piezoelektrische Ladung Q20+ abgegriffen, welche erste piezoelektrische Ladung Q20+ vorzugsweise als Drucksignal PS verwendet wird. Aus diesem Grund ist der Durchmesser der ersten Sensorgrundfläche D21, auf welcher die erste piezoelektrische Ladung Q20+ abgegriffen wird, kleiner als der Durchmesser D11 der Grundkörpermembran 11. Vorzugsweise ist die erste Sensorgrundfläche D21 kleiner/gleich 80 %, vorzugsweise kleiner/gleich 60 % des Durchmessers D11 der Grundkörpermembran 11.

Die zweite Sensorgrundfläche D23 hingegen, auf welcher die zweite piezoelektrische Ladung Q20- abgegriffen wird, welche zweite piezoelektrische Ladung Q20- vorzugsweise als erstes Massepotentialsignal MS verwendet wird, ist vorzugsweise grösser/gleich dem Durchmesser D11 der Grundkörpermembran 11.

Die Sensorvorrichtung 1 weist mehrere Sensorkontaktstellen 22, 24 auf. Die Sensorkontaktstellen 22, 24 haben die Funktion, eine elektrische Kontaktierung der Sensorelektroden 21, 23 mit der Ableitung 5 bereitzustellen.

Die Sensorkontaktstellen 22, 24 bestehen aus elektrisch leitfähigem Material wie Ag, Au, Pt, usw.

Die Sensorkontaktstellen 22, 24 umfassen eine erste Sensorkontaktstelle 22 und eine zweite Sensorkontaktstelle 24. Die erste Sensorkontaktstelle 22 ist auf der ersten Sensorelektrode 21 angeordnet und kontaktiert die erste Sensorelektrode 21 elektrisch. Die zweite Sensorkontaktstelle 24 ist auf der zweiten Sensorelektrode 23 angeordnet und kontaktiert die zweite Sensorelektrode 23 elektrisch. Jede der beiden Sensorkontaktstellen 22, 24 hat parallel zur Horizontalebene XY eine flächige Ausdehnung, welche derart gross ausgelegt ist, um eine elektrische Kontaktierung wie Thermosonic-Ball-Wedge-Bonding, Ultraschall-Wedge-Wedge-Bonding, usw. zu bewerkstelligen.

Die Grundkörpermembran 11, das auf der vorderen Oberfläche F11 der Grundkörpermembran 11 angeordnete Sensormaterial 20 und die auf den Oberflächen des Sensormaterials 20 angeordneten Sensorelektroden 21, 23 bilden den Drucksensor 1P der ersten bis vierten Ausführungsform der Sensorvorrichtung 1. Die piezoelektrische Ladung Q20+, Q20- ist der Messwert des Drucksensors 1P. Die dauerhafte Einsatztemperatur des Drucksensors 1P liegt im Bereich von -40 °C bis +500 °C.

Die Empfindlichkeit σ des Drucksensors 1P ist das Verhältnis von Messwert zu Eingangsgrösse des zu messenden Druckes P. Die Empfindlichkeit σ ist, wie in Fig. 10 dargestellt, temperaturabhängig. Auf der Abszisse ist die Temperatur T über den Bereich der dauerhaften Einsatztemperatur des Sensormaterials 20 von -40 °C bis +500 °C aufgetragen. Die Ordinate gibt die Menge der erzeugten piezoelektrischen Ladung Q20+, Q20- wieder. Die Empfindlichkeit σ bildet beispielsweise eine nichtlineare Kurve. Das Sensormaterial 20 erzeugt mit ansteigender Temperatur T weniger piezoelektrische Ladung Q20+, Q20-. Die Messung des Druckes P wird durch diese temperaturabhängige Nichtlinearität der Empfindlichkeit σ des Drucksensors 1P verfälscht.

Zur Korrektur der temperaturabhängigen Nichtlinearität der Empfindlichkeit σ des Drucksensors 1P wird vor der eigentlichen Messung des Druckes P eine Temperaturkorrektur TC ermittelt. Dazu zeigt Fig. 10 eine waagrechte, lineare Kurve L mit wahren Druckwerten, welche keine temperaturabhängige Nichtlinearität der Empfindlichkeit σ aufweisen und den zu messenden Druck P unverfälscht angeben. Die Temperaturkorrektur TC ist die Differenz zwischen der nichtlinearen Kurve der Empfindlichkeit σ und der waagrechten, linearen Kurve L. die Temperaturkorrektur TC kann eine Ausgleichsrechnung wie eine Regressionsanalyse, usw. sein. Die Temperaturkorrektur TC gibt für jede Temperatur T einen Temperaturkorrekturwert der Empfindlichkeit σ aus.

Später, während der eigentlichen Messung des Druckes P durch den Drucksensor 1P wird die Messung des Druckes P durch den Drucksensor 1P mit der Messung der Temperatur T durch den Temperatursensor 1T kombiniert. Gemäss der nachfolgenden Beschreibung wird ein der gemessenen Temperatur T entsprechender Korrekturwert der Temperaturkorrektur TC identifiziert und damit die temperaturabhängigen Nichtlinearität der Empfindlichkeit σ im Messwert des Drucksensors 1P korrigiert.

DER TEMPERATURSENSOR 1T

Die Sensorborrichtung 1 weist mindestens einen elektrischen Leiter 40 auf. Der elektrische Leiter 40 hat die Funktion, für die zu messende Temperatur T eine Widerstandsänderung ΔR zu erzeugen.

Vorzugsweise ist der elektrische Leiter 40 auf der Vorderseite des Grundkörpers 10 angeordnet. Vorzugsweise ist der elektrische Leiter 40 ausserhalb der Grundkörpermembran 11 angeordnet. Das Anordnen des elektrischen Leiters 40 auf dem Grundkörper 10 erfolgt mittels chemischer Gasphasenabscheidung, physikalischer Gasphasenabscheidung, usw.

Der elektrische Leiter 40 besteht aus elektrisch leitfähigem Material M40 wie Ni, Pt, Ti, usw.

Der elektrische Leiter 40 ist auf dem Grundkörper 10 als Mäander mit einer Dicke von 0.10 bis 10 μm, einer Breite von 2 bis 20 μm und einer Oberfläche von kleiner/gleich als 1 mm$^2$ aufgebracht. Ein elektrischer Widerstand des elektrischen Leiters 40 beträgt mehrere kΩ. Die zu messende Temperatur T bewirkt eine Widerstandsänderung ΔR des elektrischen Leiters 40, welche Widerstandsänderung ΔR proportional zur Grösse der gemessenen Temperatur T ist.

Die Sensorvorrichtung 1 weist mehrere Leiterkontaktstellen 42, 44 auf. Die Leiterkontaktstellen 42, 44 haben die Funktion, eine elektrische Kontaktierung des elektrischen Leiters 40 mit der Ableitung 5 und mit einer elektrischen Stromversorgung 41 bereitzustellen.

Die Leiterkontaktstellen 42, 44 bestehen aus elektrisch leitfähigem Material wie Ag, Au, Pt, usw.

Die Leiterkontaktstellen 42, 44 umfassen eine erste Leiterkontaktstelle 42 und eine zweite Leiterkontaktstelle 42. Die erste Leiterkontaktstelle 42 ist an einem ersten Ende des elektrischen Leiter 40 angeordnet und kontaktiert das erste Ende des elektrischen Leiters 40 elektrisch. Die zweite Leiterkontaktstelle 44 ist an einem zweiten Ende des elektrischen Leiters 40 angeordnet und kontaktiert das zweite Ende des elektrischen Leiters 40 elektrisch. Jede der beiden Leiterkontaktstellen 42, 44 hat parallel zur Horizontalebene XY eine flächige Ausdehnung, welche derart gross ausgelegt ist, um eine elektrische Kontaktierung wie Thermosonic-Ball-Wedge-Bonding, Ultraschall-Wedge-Wedge-Bonding, usw. zu bewerkstelligen.

Die Sensorvorrichtung 1 weist mindestens eine elektrische Stromversorgung 41 auf. Die elektrische Stromversorgung 41 hat die Funktion, für die Widerstandsänderung ΔR des elektrischen Leiters 40 einen Messwert zu erzeugen.

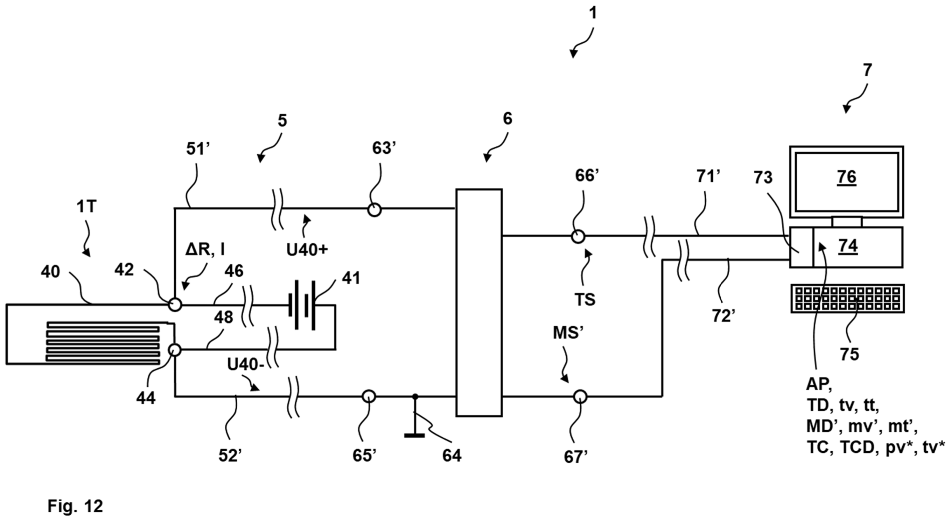

Dazu weist die elektrische Stromversorgung 41 eine Gleichstromquelle mit elektrischem Gleichstrom I und mehrere Stromversorgungsleiter 46, 48 aus elektrisch leitfähigem Material wie Ag, Au, usw. auf. Die Stromversorgungsleiter 46, 48 umfassen einen ersten Stromversorgungsleiter 46 und einen zweiten Stromversorgungsleiter 48. Gemäss dem schematischen Schaltplan der Fig. 12 erfolgt auf der ersten Leiterkontaktstelle 42 eine elektrische Kontaktierung mit dem ersten Stromversorgungsleiter 46 und auf der zweiten Leiterkontaktstelle 44 erfolgt eine elektrische Kontaktierung mit dem zweiten Stromversorgungsleiter 48. Die beiden Stromversorgungsleiter 46, 48 sind Drähte von typischerweise 15 bis 200 μm Durchmesser. Somit fliesst der elektrische Gleichstrom I der Gleichstromquelle durch den elektrischen Leiter 40. Die Grösse des elektrischen Gleichstroms I liegt im Bereich von 1.0 μA bis 10 μA. Gemäss dem Ohm'schen Gesetz resultiert aus der Widerstandsänderung ΔR und dem angelegten elektrischem Strom I eine elektrische Spannung U40+, U40-. Die Grösse der elektrischen Spannung U40+, U40- entspricht der Widerstandsänderung ΔR und ist somit ebenfalls proportional zur Grösse der gemessenen Temperatur T ist. Die elektrische Spannung U40+, U40- umfasst eine erste elektrische Spannung U40+ am ersten Ende des elektrischen Leiters 40 und eine zweite elektrische Spannung U40- am zweiten Ende des elektrischen Leiters 40. Die erste elektrische Spannung U40+ liegt an der ersten Leiterkontaktstelle 42 an. Die zweite elektrische Spannung U40- liegt an der zweiten Leiterkontaktstelle 44 an. Gemäss der nachfolgenden Beschreibung wird die erste elektrische Spannung U40+ vorzugsweise in ein Temperatursignal TS gewandelt, während die zweite elektrische Spannung U40- vorzugsweise Verwendung als zweites Massepotentialsignal MS' findet.

Der Grundkörper 10, der auf dem Grundkörper 10 angeordnete elektrische Leiter 40 und die elektrische Stromversorgung 41 bilden den Temperatursensor 1T. Die elektrische Spannung U40+, U40- ist der Messwert des Temperatursensors 1T. Die Grösse der elektrischen Spannung U40+, U40- entspricht der zu messenden Temperatur T bezüglich einer Referenztemperatur. Die dauerhafte Einsatztemperatur des Temperatursensors 1T liegt im Bereich von -40 °C bis +800 °C. Die Empfindlichkeit des Temperatursensors 1T für die Temperatur T liegt im Bereich von 5.0 μV/°C bis 9.0 μV/°C.

Vorteilhafterweise befindet sich der Temperatursensor 1T in einem zweiten Horizontalabstand DXY' von kleiner/gleich 2 mm zum Drucksensor 1P. Durch diesen geringen zweiten Horizontalabstand DXY' wird gewährleistet, dass die vom Temperatursensor 1T gemessene Temperatur T gleich der auf den Drucksensor 1P wirkenden Temperatur T ist.

DER KOMPENSATOR 1K

Gemäss der zweiten und vierten Ausführungsform weist die Sensorvorrichtung 1 mehrere Kompensatorelektroden 31, 33 auf. Die Kompensatorelektroden 31, 33 haben die Funktion, die pyroelektrische Ladung P30+, P30- von den Oberflächen des Kompensatormaterials 30 abzugreifen. Die erste Sensorelektrode 21 greift erste pyroelektrische Ladung P20+ ab, die zweite Sensorelektrode 23 greift zweite pyroelektrische Ladung P20- ab.

Die Kompensatorelektroden 31, 33 sind im Bereich der Oberflächen des Kompensatormaterials 30 angeordnet, wo pyroelektrische Ladung P30+, P30- erzeugt wird. Die Kompensatorelektroden 31, 33 umfassen eine erste Kompensatorelektrode 31 und eine zweite Kompensatorelektrode 33. Die Kompensatorelektroden 31, 33 bestehen genau wie die Sensorelektroden 21, 23 aus elektrisch leitfähigem Material wie Ag, Au, Pt, usw.

Im Querschnitt der Fig. 5 ist die erste Kompensatorelektrode 31 auf der vom Grundkörper 10 abgewandten Oberfläche des Kompensatormaterials 30 angeordnet und greift erste pyroelektrische Ladung P30+ ab. Die zweite Kompensatorelektrode 33 ist auf der dem Grundkörper 10 zugewandten Oberfläche des Kompensatormaterials 30 angeordnet und greift zweite piezoelektrische Ladung P30- ab. Jede der beiden Kompensatorelektroden 31, 33 bildet eine sich parallel zur Horizontalebene XY erstreckende Schicht. Entlang der Vertikalachse Z weisen jede der beiden Kompensatorelektroden 31, 33 eine konstante Dicke von kleiner/gleich 200 nm auf.

Beim Sensormaterial 20 wird die pyroelektrische Ladung P20+, P20- zusammen mit der piezoelektrischen Ladung Q20+, Q20- von den Sensorelektroden 21, 23 abgegriffen.

Vorzugsweise sind die Sensorelektroden 21, 23 und das Kompensatorelektroden 31, 33 identisch aufgebaut. Vorzugsweise ist die Grösse der Fläche der Sensorelektroden 21, 23 gleich der Grösse der Fläche der Kompensatorelektroden 31, 33. Vorzugsweise ist das Verhältnis der Grösse der Fläche der Sensorelektroden 21, 23 zur Grösse der Fläche der Kompensatorelektroden 31, 33 bekannt.

Gemäss der zweiten und vierten Ausführungsform weist die Sensorvorrichtung 1 mehrere Kompensatorkontaktstellen 32, 34 auf. Die Kompensatorkontaktstellen 32, 34 haben die Funktion, eine elektrische Kontaktierung der Kompensatorelektroden 31, 33 mit der Ableitung 5 bereitzustellen.

Die Kompensatorkontaktstellen 32, 34 bestehen genau wie die Sensorkontaktstellen 22, 24 aus elektrisch leitfähigem Material wie Ag, Au, Pt, usw.

Die Kompensatorkontaktstellen 32, 34 umfassen eine erste Kompensatorkontaktstelle 32 und eine zweite Kompensatorkontaktstelle 34. Die erste Kompensatorkontaktstelle 32 ist auf der erste Kompensatorelektrode 31 angeordnet und kontaktiert die erste Kompensatorelektrode 31 elektrisch. Die zweite Kompensatorkontaktstelle 34 ist auf der zweiten Kompensatorelektrode 33 angeordnet und kontaktiert die zweite Kompensatorelektrode 33 elektrisch. Jede der beiden Kompensatorkontaktstellen 32, 34 hat parallel zur Horizontalebene XY eine flächige Ausdehnung, welche derart gross ausgelegt ist, um eine elektrische Kontaktierung wie Thermosonic-Ball-Wedge-Bonding, Ultraschall-Wedge-Wedge-Bonding, usw. zu bewerkstelligen.

Der Bereich des Grundkörpers 10, in dem sich das Kompensatormaterial 30 befindet, das auf dem Grundkörper 10 angeordnete Kompensatormaterial 30 und die auf den Oberflächen des Kompensatormaterials 30 angeordneten Kompensatorelektroden 31, 33 bilden den Kompensator 1K der Ausführungsformen der Sensorvorrichtung 1 gemäss der Fig. 1 bis 3. Die dauerhafte Einsatztemperatur des Kompensators 1K liegt im Bereich von -40 °C bis +500 °C.

Vorteilhafterweise ist der Kompensator 1K in einem ersten Horizontalabstand DXY von kleiner/gleich 2 mm zum Drucksensor 1P angeordnet. Durch diesen geringen ersten Horizontalabstand DXY wird gewährleistet, dass die Temperaturänderung $\Delta T$ gleichermassen auf das Sensormaterial 20 des Drucksensors 1P und auf das Kompensatormaterial 30 des Kompensators 1K wirkt und sowohl im Sensormaterial 20 pyroelektrische Ladung P20+, P20-, als auch im Kompensatormaterial 30 pyroelektrische Ladung P30+, P30- erzeugt.

Vorteilhafterweise erzeugt das Sensormaterial 20 unter der Wirkung des Drucks P eine Vielzahl von piezoelektrischen Ladungen Q20+, Q20- und unter der Wirkung der Temperaturänderung $\Delta T$ eine Vielzahl von pyroelektrischen Ladung P20+, P20-. Für eine Messfrequenz f* von maximal 1/3 der Eigenfrequenz f1 von grösser/gleich 1 MHz weist die Vielzahl von piezoelektrischen Ladungen Q20+, Q20- des Sensormaterials 20 pro Sekunde $10^6$ piezoelektrische Ladungen Q20+, Q20- auf und die Vielzahl von pyroelektrischen Ladungen K20+, K20- des Sensormaterials 20 weist pro Sekunde $10^6$ pyroelektrische Ladungen P20+, P20- auf. Das Kompensatormaterial 30 erzeugt unter der der Wirkung der Temperaturänderung $\Delta T$ eine Vielzahl von pyroelektrischen Ladung P30+, P30-. Für eine Messfrequenz f* von maximal 1/3 der Eigenfrequenz f1 von grösser/gleich 1 MHz weist die Vielzahl von pyroelektrischen Ladungen P30+, P30- des Kompensatormaterials 30 weist pro Sekunde $10^6$ pyroelektrische Ladungen P30+, P30- auf. Für jede pyroelektrische Ladung P20+, P20- des Sensormaterials 20 existiert eine zeitlich korrespondierende pyroelektrische Ladung P30+, P30- des Kompensatormaterials 30.

DIE GRUPPE VON DRUCKSENSOREN 1P

Gemäss der dritten und vierten Ausführungsform der Sensorvorrichtung 1 weist der Grundkörper 10 eine Mehrzahl von Grundkörpermembrane 11 auf.

Vorzugsweise ist die Mehrzahl von Grundkörpermembrane 11 auf der in der Horizontalebene XY liegenden Vorderseite des Grundkörpers 10 angeordnet. Der zu messende Druck P wirkt entlang der Vertikalrichtung Z auf die vorderen Oberflächen F11 der Mehrzahl von Grundkörpermembrane 11 und lenkt die Mehrzahl von Grundkörpermembrane 11 aus. Auf jeder der Mehrzahl von Grundkörpermembrane 11 ist Sensormaterial 20 in mindestens einem Bereich auf der vorderen Oberfläche F11 der Grundkörpermembran 11 angeordnet. Durch die Auslenkung der Grundkörpermembran 11 erzeugt das Sensormaterial 20 piezoelektrische Ladung Q20+, Q20-. Auf jeder der Mehrzahl von Grundkörpermembrane 11 ist die erste Sensorelektrode 21 auf der von der Grundkörpermembran 11 abgewandten Oberfläche des Sensormaterials 20 angeordnet und greift erste piezoelektrische Ladung Q20+ ab. Die zweite Sensorelektrode 23 ist auf der der Grundkörpermembran 11 zugewandten Oberfläche des Sensormaterials 20 angeordnet und greift zweite piezoelektrische Ladung Q20- ab.

Gemäss der dritten und vierten Ausführungsform weist die Sensorvorrichtung 1 mehrere Sensorgruppenleiter 25, 27 auf. Die Sensorgruppenleiter 25, 27 haben die Funktion der Sammlung der piezoelektrischen Ladung Q20+, Q20-.

Die Sensorgruppenleiter 25, 27 bestehen aus elektrisch leitfähigem Material wie Ag, Au, Pt, usw.

Die Sensorgruppenleiter 25, 27 sind im Bereich der beiden Oberflächen des Sensormaterials 20 angeordnet. Die Sensorgruppenleiter 25, 27 umfassen einen ersten Sensorgruppenleiter 25 und einen zweiten Sensorgruppenleiter 27. Der erste Sensorgruppenleiter 25 kontaktiert elektrisch die ersten Sensorelektroden 21 und schaltet diese elektrisch in Reihe. Der zweite Sensorgruppenleiter 27 kontaktiert elektrisch die zweiten Sensorelektroden 23 und schaltet diese elektrisch in Reihe.

Die Mehrzahl der Grundkörpermembrane 11 auf welchen auf vorderen Oberflächen F11 Sensormaterial 20 angeordnet ist, das Sensormaterial 20, welches auf der Mehrzahl der Grundkörpermembrane 11 angeordnet ist, und die auf den Oberflächen dieses Sensormaterials 20 angeordneten Sensorelektroden 21, 23 und Sensorgruppenleiter 25, 27 bilden eine Gruppe von Drucksensoren 1P.

Vorteilhafterweise ist im Grundkörper 10 eine Mehrzahl von grösser/gleich zwei Grundkörpermembrane 11, vorzugsweise eine Mehrzahl von grösser/gleich sechzehn Grundkörpermembrane 11, vorzugsweise eine Mehrzahl von grösser/gleich 128 Grundkörpermembrane 11 ausgeformt.

Die Erhöhung der Eigenfrequenz f1 der erfindungsgemässen Sensorvorrichtung 1 wird durch eine Abnahme des Verhältnisses von Dicke T11 zu Durchmesser D11 der Grundkörpermembran 11 erreicht, dafür nimmt aber auch die Empfindlichkeit $\sigma$ der erfindungsgemässen Sensorvorrichtung 1 ab. Die Empfindlichkeit $\sigma$ verändert sich quadratisch mit dem Durchmesser D11 der Grundkörpermembran 11. Bei konstant gehaltener Dicke T11 resultiert aus einer Halbierung des Durchmessers D11 der Grundkörpermembran 11 eine Viertelung der Menge der erzeugten piezoelektrischen Ladung Q20+, Q20-. Durch die Anordnung einer Mehrzahl von Grundkörpermembrane 11 im Grundkörper 10, wobei auf jeder vorderen Oberflächen F11 der Mehrzahl von Grundkörpermembrane 11 Sensormaterial 20 angeordnet ist, und die Reihenschaltung der Sensorelektroden 21, 23, welche die piezoelektrische Ladung Q20+, Q20- des Sensormaterials 20 abgreifen, lässt sich die Abnahme der Empfindlichkeit $\sigma$ erfindungsgemässen Sensorvorrichtung 1 ausgleichen und sogar erhöhen.

Gemäss der dritten und vierten Ausführungsform weist die Sensorvorrichtung 1 mehrere Sensorgruppenkontaktstellen 26, 28 auf. Die Sensorgruppenkontaktstellen 26, 28 haben die Funktion der Bereitstellung einer elektrischen Kontaktierung mit der Ableitung 5.

Die Sensorgruppenkontaktstellen 26, 28 bestehen aus elektrisch leitfähigem Material wie Ag, Au, usw. Die Sensorgruppenkontaktstellen 26, 28 umfassen eine erste Sensorgruppenkontaktstelle 26 und eine zweite Sensorgruppenkontaktstelle 28. Die erste Sensorgruppenkontaktstelle 26 ist auf dem ersten Sensorgruppenleiter 25 angeordnet und kontaktiert diesen elektrisch. Die zweite Sensorgruppenkontaktstelle 28 ist auf dem zweiten Sensorgruppenleiter 27 angeordnet und kontaktiert diesen elektrisch. Jede der beiden Sensorgruppenkontaktstellen 26, 28 hat parallel zur Horizontalebene XY eine flächige Ausdehnung, welche derart gross ausgelegt ist, um eine elektrische Kontaktierung wie Thermosonic-Ball-Wedge-Bonding, Ultraschall-Wedge-Wedge-Bonding, usw. zu bewerkstelligen.

DIE GRUPPE VON KOMPENSATOREN 1K

Gemäss der vierten Ausführungsform weist die Sensorvorrichtung 1 einen Grundkörper 10 mit einer Mehrzahl von Bereichen mit Kompensatormaterial 30 auf.

Vorzugsweise ist die Mehrzahl von Bereichen mit Kompensatormaterial 30 auf der Vorderseite des Grundkörpers 10 angeordnet. Sowohl das Kompensatormaterial 30 als auch das Sensormaterial 20 besteht vorzugsweise aus dem gleichen CGS, LGS, Turmalin, AlN, PZT, usw. mit pyroelektrischen Effekt.

Die Bereiche mit Kompensatormaterial 30 sind voneinander beanstandet und so durch das elektrisch isolierende Material des Grundkörpers 10 zueinander elektrisch isoliert. Vorzugsweise ist die Mehrzahl von Bereichen mit Kompensatormaterial 30 ausserhalb der Mehrzahl von Grundkörpermembrane 11 angeordnet. So sind die Bereiche mit Kompensatormaterial 30 durch das elektrisch isolierende Material des Grundkörpers 1 auch vom auf der Mehrzahl von Grundkörpermembrane 11 angeordneten Sensormaterial 20 elektrisch isoliert.

Dadurch, dass die Mehrzahl der Bereiche mit Kompensatormaterial 30 ausserhalb der Mehrzahl der Grundkörpermembran 11 angeordnet ist, kann der zu messende Druck P nicht auf die Mehrzahl der Bereiche mit Kompensatormaterial 30 wirken, denn der Grundkörper 10 erfährt durch die Einwirkung des Druckes P keine Auslenkung und somit erzeugt die Mehrzahl der Bereiche mit Kompensatormaterial 30 keine piezoelektrische Ladung als Messwert.

Eine Temperaturänderung $\Delta T$ wirkt gleichermassen auf das auf der Mehrzahl von Grundkörpermembrane 11 angeordnete Sensormaterial 20 und auf die Mehrzahl von Bereichen mit Kompensatormaterial 30 und erzeugt sowohl im Sensormaterial 20 pyroelektrische Ladung P20+, P20-, als auch im Kompensatormaterial 30 pyroelektrische Ladung P30+, P30-. Vorzugsweise sind das Sensormaterial 20 und das Kompensatormaterial 30 identisch aufgebaut, so dass die Menge der im Sensormaterial 20 erzeugten pyroelektrischen Ladung P20+, P20- gleich der Menge der im Kompensatormaterial 30 erzeugten pyroelektrischen Ladung P30+, P30- ist.

Auf jeder der Mehrzahl von Grundkörpermembrane 11 ist die erste Sensorelektrode 21 auf der von der Grundkörpermembran 11 abgewandten Oberfläche des Sensormaterials 20 angeordnet und greift erste pyroelektrische Ladung P20+ ab. Die zweite Sensorelektrode 23 ist auf der der Grundkörpermembran 11 zugewandten Oberfläche des Sensormaterials 20 angeordnet und greift zweite pyroelektrische Ladung P20- ab. Auf jedem der Mehrzahl von Bereichen mit Kompensatormaterial 30 ist die erste Kompensatorelektrode 31 auf der vom Grundkörper 10 abgewandten Oberfläche des Kompensatormaterials 30 angeordnet und greift erste pyroelektrische Ladung P30+ ab. Die zweite Kompensatorelektrode 33 ist auf der dem Grundkörper 10 zugewandten Oberfläche des Kompensatormaterials 30 angeordnet und greift zweite pyroelektrische Ladung P30- ab.

Die Sensorvorrichtung 1 weist mehrere Kompensatorgruppenleiter 35, 37 auf. Die Kompensatorgruppenleiter 35, 37 haben die Funktion der Sammlung der pyroelektrischen Ladung P30+, P30-.

Die Kompensatorgruppenleiter 35, 37 bestehen aus elektrisch leitfähigem Material wie Ag, Au, Pt, usw.

Die Kompensatorgruppenleiter 35, 37 sind im Bereich der beiden Oberflächen des Kompensatormaterials 30 angeordnet. Die Kompensatorgruppenleiter 35, 37 umfassen einen ersten Kompensatorgruppenleiter 35 und einen zweiten Kompensatorgruppenleiter 37. Der erste Kompensatorgruppenleiter 35 kontaktiert elektrisch die ersten Kompensatorelektroden 31 und schaltet diese elektrisch in Reihe. Der zweite Kompensatorgruppenleiter 37 kontaktiert elektrisch die zweiten Kompensatorelektroden 33 und schaltet diese elektrisch in Reihe.

Die Bereiche des Grundkörpers 10 auf welchen die Mehrzahl der Bereiche mit Kompensatormaterial 30 angeordnet ist, die Mehrzahl der Bereiche mit Kompensationsmaterial 30, und die auf den Oberflächen dieser Bereiche mit Kompensatormaterial 30 angeordneten Kompensatorelektroden 31, 33 und Kompensatorgruppenleiter 35, 37 bilden eine Gruppe von Kompensatoren 1K.

Die Sensorvorrichtung 1 weist mehrere Kompensatorgruppenkontaktstellen 36, 38 auf. Die Kompensatorgruppenkontaktstellen 36, 38 haben die Funktion der Bereitstellung einer elektrischen Kontaktierung mit der Ableitung 5.

Die Kompensatorgruppenkontaktstellen 36, 38 bestehen aus elektrisch leitfähigem Material wie Ag, Au, Pt, usw.

Die Kompensatorgruppenkontaktstellen 36, 38 umfassen eine erste Kompensatorgruppenkontaktstelle 36 und eine zweite Kompensatorgruppenkontaktstelle 38. Die erste Kompensatorgruppenkontaktstelle 36 ist auf dem ersten Kompensatorgruppenleiter 35 angeordnet und kontaktiert diesen elektrisch. Die zweite Kompensatorgruppenkontaktstelle 38 ist auf dem zweiten Kompensatorgruppenleiter 37 angeordnet und kontaktiert diesen elektrisch. Jede der beiden Kompensatorgruppenkontaktstellen 36, 38 hat parallel zur Horizontalebene XY eine flächige Ausdehnung, welche derart gross ausgelegt ist, um eine elektrische Kontaktierung wie Thermosonic-Ball-Wedge-Bonding, Ultraschall-Wedge-Wedge-Bonding, usw. zu bewerkstelligen.

DIE ABLEITUNG 5

Die Ableitung 5 hat die Funktion, die piezoelektrische Ladung Q20+, Q20- und die elektrische Spannung U40+, U40- abzuleiten.

Die Ableitung 5 weist mehrere Ladungsableiter 51, 51', 52, 52' aus elektrisch leitfähigem Material wie Kupfer (Cu), Ag, Au, usw. auf. Die Ladungsableiter 51, 51', 52, 52' sind Drähte von typischerweise 15 bis 200 $\mu$m Durchmesser.

Die Ladungsableiter 51, 51', 52, 52' umfassen einen ersten Ladungsableiter 51, einen zweiten Ladungsableiter 52, einen ersten Spannungsableiter 51' und einen zweiten Spannungsableiter 52'.

Gemäss dem schematischen Schaltplan der Fig. 11 kontaktiert der erste Ladungsableiter 51 mit der ersten Sensorkontaktstelle 22 und der zweite Ladungsableiter 52 kontaktiert mit der zweiten Sensorkontaktstelle 24. Über diese Spannungsableiter 51, 52 wird die elektrische Ladung Q20+, Q20- von den beiden Sensorkontaktstelle 22, 24 abgeleitet.

Gemäss dem schematischen Schaltplan der Fig. 12 kontaktiert der erste Spannungsableiter 51' mit der ersten Leiterkontaktstelle 42 und der zweite Spannungsableiter 52' kontaktiert mit der zweiten Leiterkontaktstelle 44. Über diese Spannungsableiter 51', 52' wird die elektrische Spannung U40+, U40- von den beiden Leiterkontaktstelle 42, 44 abgeleitet.

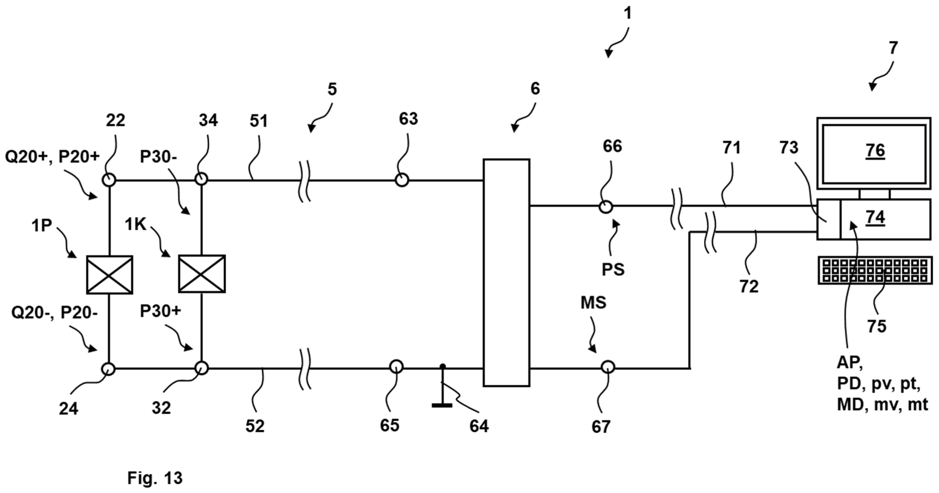

Gemäss dem schematischen Schaltplan der Fig. 13 kontaktiert der erste Ladungsableiter 51 über die erste Sensorkontaktstelle 22 elektrisch mit der ersten Sensorelektrode 21 und über die zweite Kompensatorkontaktstelle 34 elektrisch mit der zweiten Kompensatorelektrode 33. Somit liegen am ersten Ladungsableiter 51 erste piezoelektrische Ladung Q20+ und erste pyroelektrische Ladung P20+ des Sensormaterials 20 und zweite pyroelektrische Ladung P30- des Kompensatormaterials 30 an. Vorteilhafterweise ist die Menge der ersten pyroelektrischen Ladung P20+ des Sensormaterials 20 gleich der Menge der zweiten pyroelektrischen Ladung P30- des Kompensatormaterials 30, so dass sich die pyroelektrischen Ladung P20+, P30- am ersten Ladungsableiter 51 kompensieren.

Gemäss dem schematischen Schaltplan der Fig. 13 kontaktiert der zweite Ladungsableiter 52 über die zweite Sensorkontaktstelle 24 elektrisch mit der zweiten Sensorelektrode 23 und über die erste Kompensatorkontaktstelle 32 elektrisch mit der ersten Kompensatorelektrode 31. Somit liegen am zweiten Ladungsableiter 52 zweite piezoelektrische Ladung Q20- und zweite pyroelektrische Ladung P20- des Sensormaterials 20 und erste pyroelektrische Ladung P30+ des Kompensatormaterials 30 an. Vorteilhafterweise ist die Menge der zweiten pyroelektrischen Ladung P20- des Sensormaterials 20 gleich der Menge der ersten pyroelektrischen Ladung P30+ des Kompensatormaterials 30, so dass sich die pyroelektrischen Ladung P20-, P30+ am zweiten Ladungsableiter 52 kompensieren.

Über die Ladungsableiter 51, 52 wird die piezoelektrische Ladung Q20+, Q20- von den Sensorkontaktstellen 22, 24 abgeleitet.

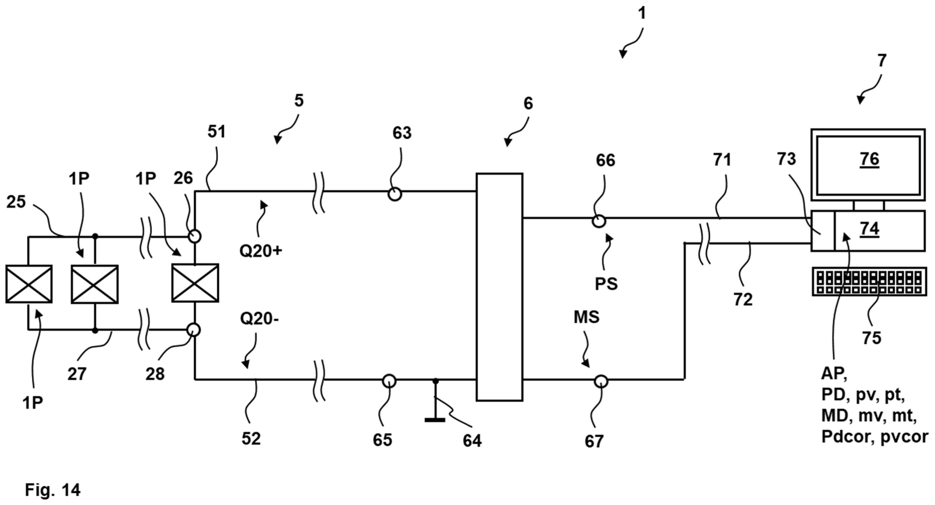

Gemäss dem schematischen Schaltplan der Fig. 14 kontaktiert der erste Ladungsableiter 51 mit der ersten Sensorgruppenkontaktstelle 26 und der zweite Ladungsableiter 52 kontaktiert mit der zweiten Sensorgruppenkontaktstelle 28. Über diese Spannungsableiter 51, 52 wird die elektrische Ladung Q20+, Q20- von den beiden Sensorgruppenkontaktstelle 26, 28 abgeleitet.

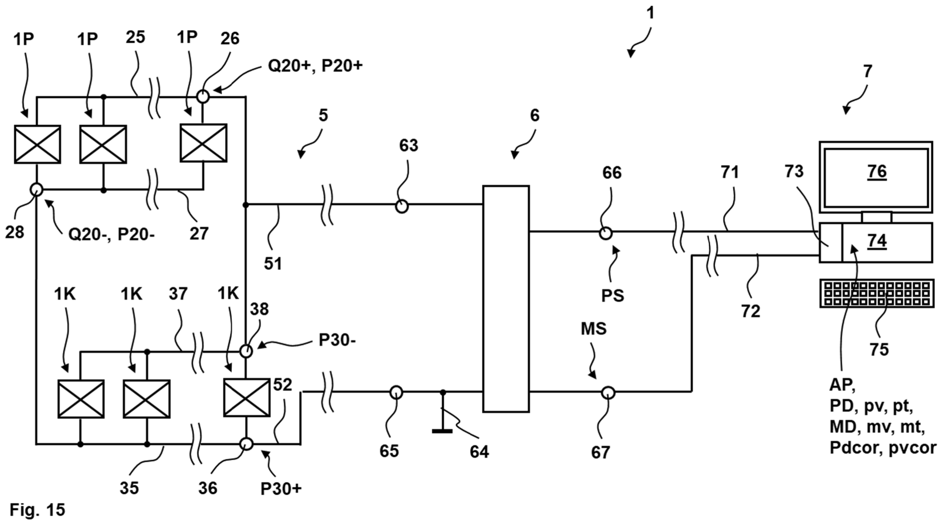

Gemäss dem schematischen Schaltplan der Fig. 15 kontaktiert der erste Ladungsableiter 51 elektrisch mit der ersten Sensorgruppenkontaktstelle 26 und mit der zweiten Kompensatorgruppenkontaktstelle 38. Somit liegen am ersten Ladungsableiter 51 erste piezoelektrische Ladung Q20+ und erste pyroelektrische Ladung P20+ des Sensormaterials 20 und zweite pyroelektrische Ladung P30- des Kompensatormaterials 30 an. Vorteilhafterweise ist die Menge der ersten pyroelektrischen Ladung P20+ des Sensormaterials 20 gleich der Menge der zweiten pyroelektrischen Ladung P30- des Kompensatormaterials 30, so dass sich die pyroelektrischen Ladung P20+, P30- am ersten Ladungsableiter 51 kompensieren.

Gemäss dem schematischen Schaltplan der Fig. 15 kontaktiert der zweite Ladungsableiter 52 elektrisch mit der zweiten Sensorgruppenkontaktstelle 28 und mit der ersten Kompensatorgruppenkontaktstelle 36. Somit liegen am zweiten Ladungsableiter 52 zweite piezoelektrische Ladung Q20- und zweite pyroelektrische Ladung P20- des Sensormaterials 20 und erste pyroelektrische Ladung P30+ des Kompensatormaterials 30 an. Vorteilhafterweise ist die Menge der zweiten pyroelektrischen Ladung P20- des Sensormaterials 20 gleich der Menge der ersten pyroelektrischen Ladung P30+ des Kompensatormaterials 30, so dass sich die pyroelektrischen Ladung P20-, P30+ am zweiten Ladungsableiter 52 kompensieren.

DIE WANDLEREINHEIT 6

Die Wandlereinheit 6 hat die Funktion, abgeleitete piezoelektrische Ladung Q20+, Q20- in mindestens ein Drucksignal PS und mindestens ein erstes Massepotentialsignal MS elektrisch zu wandeln und elektrische Spannung U40+, U40-in mindestens ein Temperatursignal TS und mindestens ein zweites Massepotentialsignal MS' zu wandeln.

Gemäss den schematischen Schaltplänen der Fig. 11 bis 15 weist die Wandlereinheit 6 mindestens einen ersten Ladungseingangskontakt 63, mindestens einen zweiten Ladungseingangskontakt 65, mindestens einen ersten Spannungseingangskontakt 63', mindestens einen zweiten Spannungseingangskontakt 65', mindestens ein Massepotential 64, mindestens einen ersten Signalausgangskontakt 66, mindestens einen zweiten Signalausgangskontakt 66', mindestens einen ersten Massepotentialausgangskontakt 67 und mindestens einen zweiten Massepotentialausgangskontakt 67' auf.

Die Ladungseingangskontakte 63, 65 und die Spannungseingangskotakte 63', 65' haben die Funktion, eine elektrische Kontaktierung der Wandlereinheit 6 mit der Ableitung 5 bereitzustellen. Die Ladungseingangskontakte 63, 65 und die Spannungseingangskontakte 63', 65' bestehen aus elektrisch leitfähigem Material wie Cu, Ag, Au, usw.

Der erste Ladungsableiter 51 ist mit dem ersten Ladungseingangskontakt 63 elektrisch kontaktiert. Somit liegen die erste piezoelektrische Ladung Q20+ des Drucksensors 1P sowie der Gruppe von Drucksensoren 1P an der Wandlereinheit 6 an.

Der zweite Ladungsableiter 52 ist über den zweiten Ladungseingangskontakt 65 mit dem Massepotenzial 64 elektrisch kontaktiert. Somit liegen die zweite piezoelektrische Ladung Q20- des Drucksensors 1P sowie der Gruppe von Drucksensoren 1P auf dem Massepotential 64.

Der erste Spannungsableiter 51' ist mit dem ersten Spannungseingangskontakt 63' elektrisch kontaktiert. Somit liegt die erste elektrische Spannung U40+ des Temperatursensors 1T an der Wandlereinheit 6 an.

Der zweite Spannungsableiter 52' ist über den zweiten Spannungseingangskontakt 65' mit dem Massepotenzial 64 elektrisch kontaktiert. Somit liegen die zweite elektrische Spannung U40- des Temperatursensors 1T auf dem Massepotential 64.

Die Wandlereinheit 6 wandelt die erste piezoelektrischen Ladung Q20+ in eine elektrisch verstärkte elektrische Ausgangsspannung. Das Drucksignal PS ist die elektrische Ausgangsspannung. Das Drucksignal PS ist proportional zur Grösse des gemessenen Druckes P. Jede erste piezoelektrische Ladung Q20+ wandelt die Wandlereinheit 6 in ein Drucksignal PS.

Die Wandlereinheit 6 wandelt die zweite piezoelektrischen Ladung Q20- in eine elektrische Ausgangsspannung. Das erste Massepotentialsignal MS ist die elektrische Ausgangsspannung. Jede zweite piezoelektrische Ladung Q20- wandelt die Wandlereinheit 6 in ein erstes Massepotentialsignal MS.

Die Wandlereinheit 6 wandelt die erste elektrische Spannung U40+ in eine elektrisch verstärkte Ausgangsspannung. Das Temperatursignal TS ist die elektrische Ausgangsspannung. Das Temperatursignal TS ist proportional zur Grösse der gemessenen Temperatur T. Jede erste elektrische Spannung U40+ wandelt die Wandlereinheit 6 in ein Temperatursignal TS.

Die Wandlereinheit 6 wandelt die zweite elektrischen Spannung U40- in eine elektrische Ausgangsspannung. Das zweite Massepotentialsignal MS' ist die elektrische Ausgangsspannung. Jede zweite elektrische Spannung U40-wandelt die Wandlereinheit 6 in ein zweites Massepotentialsignal MS'.

Der Signalausgangskontakt 66, 66' und der Massepotentialausgangskontakt 67, 67' haben die Funktion, eine elektrische Kontaktierung der Wandlereinheit 6 mit der Auswerteeinheit 7 bereitzustellen. Der Signalausgangskontakt 66, 66' und der Massepotentialausgangskontakt 67, 67' bestehen aus elektrisch leitfähigem Material wie Cu, Ag, Au, usw.

Das Drucksignal PS liegt am ersten Signalausgangskontakt 66 an. Der erste Massepotentialausgangskontakt 67 ist mit dem Massepotenzial 64 elektrisch kontaktiert. Das erste Massepotentialsignal MS liegt am ersten Massepotentialausgangskontakt 67 an.

Das Temperatursignal TS liegt am zweiten Signalausgangskontakt 66' an. Der zweite Massepotentialausgangskontakt 67' ist mit dem Massepotenzial 64 elektrisch kontaktiert. Das zweite Massepotentialsignal MS' liegt am zweiten Massepotentialausgangskontakt 67' an.

DIE AUSWERTEEINHEIT 7

Die Auswerteeinheit 7 hat die Funktion, das Drucksignal PS, das erste Massepotentialsignal MS, das Temperatursignal TS und das zweite Massepotentialsignal MS' auszuwerten.

Dazu weist die Auswerteeinheit 7 mindestens einen ersten Signalleiter 71, mindestens einen zweiten Signalleiter 71', mindestens einen ersten Massepotentialleiter 72, mindestens einen zweiten Massepotentialleiter 72', mindestens eine Schnittstelle 73, mindestens eine Recheneinheit 74, mindestens eine Eingabeeinheit 75 und mindestens eine Ausgabeeinheit 76 auf.

Der Signalleiter 71, 71' und der Massepotentialleiter 72, 72' sind aus elektrisch leitfähigem Material wie Cu, Ag, Au, usw.

Am ersten Signalausgangskontakt 66 erfolgt eine elektrische Kontaktierung mit dem ersten Signalleiter 71 und am ersten Massepotentialausgangskontakt 67 erfolgt eine elektrische Kontaktierung mit dem ersten Masspotentialleiter 72. Über den ersten Signalleiter 71 wird das Drucksignal PS zur Schnittstelle 73 abgeleitet. Über den ersten Massepotentialleiter 72 wird das erste Massepotentialsignal MS zur Schnittstelle 73 abgeleitet.

Am zweiten Signalausgangskontakt 66' erfolgt eine elektrische Kontaktierung mit dem zweiten Signalleiter 71' und am zweiten Massepotentialausgangskontakt 67' erfolgt eine elektrische Kontaktierung mit dem zweiten Masspotentialleiter 72'. Über den zweiten Signalleiter 71' wird das Temperatursignal TS zur Schnittstelle 73 abgeleitet. Über den zweiten Massepotentialleiter 72' wird das zweite Massepotentialsignal MS' zur Schnittstelle 73 abgeleitet.

Die Schnittstelle 73 hat die Funktion, das Drucksignal PS, das erste Massepotentialsignal MS, das Temperatursignal TS und das zweite Massepotentialsignal MS' in Druckdatenelemente PD, Temperaturdatenelemente TD, erste Massepotentialdatenelemente MD und zweite Massepotentialdatenelemente MD' zu digitalisieren.

Dazu weist die Schnittstelle 73 mindestens ein Wandlerelement wie einen Analog/Digital-Wandler, usw. auf. Das Wandlerelement ist eingerichtet, das Drucksignal PS, das erste Massepotentialsignal MS, das Temperatursignal TS und das zweite Massepotentialsignal MS' in Druckdatenelemente PD, Temperaturdatenelemente TD, erste Massepotentialdatenelemente MD und zweite Massepotentialdatenelemente MD' zu digitalisieren. Jedes Druckdatenelement PD, Temperaturdatenelement TD, erstes Massepotentialdatenelement MD und zweites Massepotentialdatenelemente MD' ist eine binäre Zahlenfolge mit einer Auflösung von 12 Bit, 16 Bit, usw.

Die Schnittstelle 73 weist auch mindestens einen Zeitgeber wie eine Uhr, usw. auf. Der Zeitgeber ist eingerichtet, jedes Druckdatenelement PD mit einem Druckzeitpunkt pt, jedes Temperaturdatenelement TD mit einem Temperaturzeitpunkt tt, jedes erste Massepotentialdatenelement MD mit einem ersten Massepotentialzeitpunkt mt und jedes zweite Massepotentialdatenelement MD' mit einem zweiten Massepotentialzeitpunkt mt' zu versehen. Jeder Druckzeitpunkt pt, Temperaturzeitpunkt tt, erster Massepotentialzeitpunkt mt und zweiter Massepotentialzeitpunkt mt ist eine binäre Zahlenfolge mit einer Auflösung von 12 Bit, 16 Bit, usw. Jeder Druckzeitpunkt pt, Temperaturzeitpunkt tt, erster Massepotentialzeitpunkt mt und zweiter Massepotentialzeitpunkt mt weist eine zeitliche Auflösung auf, welche gemäss dem Nyquist-Shannon-Abtasttheorem gleich dem Kehrwert der doppelten Messfrequenz f* ist. Für eine Messfrequenz f* von maximal 1/3 der Eigenfrequenz f1 von grösser/gleich 1 MHz weist der Zeitpunkt pt, mt eine zeitliche Auflösung von grösser/gleich $3/2 \cdot 10^{-6}$ sec auf.

Jedes Druckdatenelement PD weist einen Druckbetrag pv und einen Druckzeitpunkt pt auf, welcher Druckzeitpunkt pt mit dem Druckdatenelement PD assoziiert ist. Die Schnittstelle 73 digitalisiert jedes Drucksignal PS in ein Druckdatenelement PD mit einem Druckbetrag pv und versieht das Druckdatenelement PD mit einem assoziierten Druckzeitpunkt pt.

Jedes Temperaturdatenelement TD weist einen Temperaturbetrag tv und einen Temperaturzeitpunkt tt auf, welcher Temperaturzeitpunkt tt mit dem Temperaturdatenelement TD assoziiert ist. Die Schnittstelle 73 digitalisiert jedes Temperatursignal TS in ein Temperaturdatenelement TD mit einem Temperaturbetrag tv und versieht das Temperaturdatenelement TD mit einem assoziierten Temperaturzeitpunkt tt.

Jedes erste Massepotentialdatenelement MD weist einen ersten Massepotentialbetrag mv und einen ersten Massepotentialzeitpunkt mt auf, welcher erste Massepotentialzeitpunkt mt mit dem ersten Massepotentialdatenelement MD assoziiert ist. Die Schnittstelle 73 digitalisiert jedes erste Massepotentialsignal MS in ein erstes Massepotentialdatenelement MD mit einem ersten Massepotentialbetrag mv und versieht das erste Massepotentialdatenelement MD mit einem assoziierten ersten Massepotentialzeitpunkt mt.

Jedes zweite Massepotentialdatenelement MD' weist einen zweiten Massepotentialbetrag mv' und einen zweiten Massepotentialzeitpunkt mt' auf, welcher zweite Massepotentialzeitpunkt mt' mit dem zweiten Massepotentialdatenelement MD' assoziiert ist. Die Schnittstelle 73 digitalisiert jedes zweite Massepotentialsignal MS' in ein zweites Massepotentialdatenelement MD' mit einem zweiten Massepotentialbetrag mv' und versieht das zweite Massepotentialdatenelement MD' mit einem assoziierten zweiten Massepotentialzeitpunkt mt'.

Die Recheneinheit 74 weist mindestens einen Datenspeicher und mindestens einen Datenprozessor auf.

Die Recheneinheit 74 weist mindestens ein Auswerteprogramm AP auf, welches im Datenspeicher gespeichert und in den Datenprozessor ladbar ist. Das in den Datenprozessor geladene Auswerteprogramm AP ist eingerichtet, die Druckdatenelemente PD, Temperaturdatenelemente TD, ersten Massepotentialdatenelemente MD und zweiten Massepotentialdatenelemente MD' auszuwerten.

Die Auswertung umfasst eine Korrektur der temperaturabhängigen Nichtlinearität der Empfindlichkeit σ des Drucksensors 1P in mindestens einem Druckdatenelement PD.

Dazu liest das Auswerteprogramm AP die mit den Druckdatenelementen PD und den Temperaturdatenelementen TD assoziierten Druckzeitpunkte pt und Temperaturzeitpunkte tt ein.

Nun vergleicht das Auswerteprogramm AP die Druckzeitpunkte pt und die Temperaturzeitpunkte tt miteinander. Das Auswerteprogramm AP kombiniert ein Druckdatenelement PD, dessen assoziierter Druckzeitpunkt pt gleich dem mit dem Temperaturdatenelement TD assoziierten Temperaturzeitpunkt tt ist, mit diesem Temperaturdatenelement TD.

Im Datenspeicher ist eine Temperaturkorrektur TC mit einer Vielzahl von Temperaturkorrekturdatenelementen TCD gespeichert. Vorzugsweise weist die Temperaturkorrektur TC über den gesamten Bereich der dauerhaften Einsatztemperatur des Sensormaterials 20 von -40 °C bis +500 °C Temperaturkorrekturdatenelemente TCD auf. Jedes Temperaturkorrekturdatenelementen TCD weist einen weiteren Druckbetrag pv* und einen dem weiteren Druckbetrag pv* zugeordneten weiteren Temperaturbetrag tv* auf. Der weitere Druckbetrag pv* ist derjenige Korrekturwert, um den der Druckbetrag pv des Druckdatenelements PD bei einer Temperatur T aufgrund der temperaturabhängige Nichtlinearität der Empfindlichkeit σ des Drucksensors 1P vom wahren Druckwert abweicht. Vorzugsweise weist die Temperaturkorrektur TC eine Auflösung der Temperatur T von kleiner/gleich 0.1 °C auf. Vorzugsweise weist die Temperaturkorrektur TC eine Vielzahl von mehr als $10^6$ Temperaturkorrekturdatenelementen TCD auf.

Das Auswerteprogramm AP liest mindestens ein Temperaturkorrekturdatenelement TCD aus dem Datenspeicher. Das Auswerteprogramm AP identifiziert ein Temperaturkorrekturdatenelement TCD, dessen zugeordneter weiterer Temperaturbetrag tv* gleich dem Temperaturbetrag tv des kombinierten Temperaturdatenelements TD ist (tv*=tv).

Nun subtrahiert das Auswerteprogramm AP den weiteren Druckbetrag pv* des identifizierten Temperaturkorrekturdatenelements TCD vom Druckbetrag pv des damit kombinierten Druckdatenelements PD. Das Ergebnis der Subtraktion ist ein temperaturkorrigierter Druckbetrag pvcor. Durch die Subtraktion wird die temperaturabhängigen Nichtlinearität der Empfindlichkeit σ im Druckbetrag pv des Druckdatenelements PD korrigiert. Das Messdatenelement mit dem temperaturkorrigierten Druckbetrag pvcor wird temperaturkorrigiertes Druckdatenelement PDcor genannt:

$$PDcor(pvcor, tv^*=tv) = PD(pv, tv^*=tv) - TCD(pv^*, tv^*=tv)$$

Die Recheneinheit 74 ist über die Eingabeeinheit 75 bedienbar. Das Verb "bedienen" hat die Bedeutung, dass eine menschliche Person über die Eingabeeinheit 75 Befehle eingeben kann, welche Befehle von der Recheneinheit 75 ausgeführt werden. Die Eingabeeinheit 75 kann eine Tastatur oder ein berührungsempfindlicher Bildschirm zur Eingabe von Befehlen sein. Über die Eingabeeinheit 75 lassen sich Befehle als Zeichenfolge eingeben und das in den Datenprozessor geladene Auswerteprogramm AP ist eingerichtet, für eingegebene Befehle Steuerdaten zu erzeugen. So kann der eingegebene Befehl lauten, die Sensorvorrichtung 1 einzuschalten oder auszuschalten und das in den Datenprozessor geladene Auswerteprogramm AP ist eingerichtet, für den Befehl Steuerdaten zu erzeugen, welche Steuerdaten die Sensorvorrichtung 1 einzuschalten oder auszuschalten.

Auch ist das in den Datenprozessor geladene Auswerteprogramm AP eingerichtet die Druckdatenelemente PD, Temperaturdatenelemente TD, ersten Massepotentialdatenelemente MD und zweiten Massepotentialdatenelemente MD' zur Auswertung graphisch darzustellen. Die Ausgabeeinheit 76 kann ein Bildschirm sein, auf dem die Druckdatenelemente PD, Temperaturdatenelemente TD, ersten Massepotentialdatenelemente MD und zweiten Massepotentialdatenelemente MD' für die menschliche Person graphisch dargestellt sind.

Bei Kenntnis der vorliegenden Erfindung kann der Fachmann vielfältige Variationen der gezeigten Ausführungsformen realisieren. So lassen sind der Drucksensor 1P, der Temperatursensor 1T, der Kompensator 1K, die Ableitung 5 und die Wandlereinheit 6 in einem Gehäuse am Ort der Messung des Druckes P und der Messung der Temperatur T realisieren.

**Bezugszeichenliste**

| | |
|---|---|
| 1 | Sensorvorrichtung |
| 1P | Drucksensor |
| 1K | Kompensator |
| 1T | Temperatursensor |
| 5 | Ableitung |
| 6 | Wandlereinheit |
| 7 | Auswerteeinheit |
| 10 | Grundkörper |
| 11 | Grundkörpermembran |
| D11 | Durchmesser der Grundkörpermembran |
| F11 | vordere Oberfläche der Grundkörpermembran |
| F12 | hintere Oberfläche der Grundkörpermembran |
| T11 | Dicke der Grundkörpermembran |
| 12 | Grundkörperöffnung |
| 13 | Tragschicht |
| 14 | Grenzschicht |
| 15 | Stoppschicht |
| 20 | Sensormaterial |
| D20 | Grundfläche des Sensormaterials |
| T20 | Dicke des Sensormaterials |
| 21 | erste Sensorelektrode |
| D21 | Grundfläche der ersten Sensorelektrode |
| 22 | erste Sensorkontaktstelle |
| 23 | zweite Sensorelektrode |
| D23 | Grundfläche der zweiten Sensorelektrode |
| 24 | zweite Sensorkontaktstelle |
| 25 | erster Sensorgruppenleiter |
| 26 | erste Sensorgruppenkontaktstelle |
| 27 | zweiter Sensorgruppenleiter |
| 28 | zweite Sensorgruppenkontaktstelle |
| 30 | Kompensatormaterial |
| D30 | Grundfläche des Kompensatormaterials |
| T30 | Dicke des Kompensatormaterials |
| 31 | erste Kompensatorelektrode |

| | |
|---|---|
| 32 | erste Kompensatorkontaktstelle |
| 33 | zweite Kompensatorelektrode |
| 34 | zweite Kompensatorkontaktstelle |
| 35 | erster Kompensatorgruppenleiter |
| 36 | erste Kompensatorgruppenkontaktstelle |
| 37 | zweiter Kompensatorgruppenleiter |
| 38 | zweite Kompensatorgruppenkontaktstelle |
| 40 | elektrischer Leiter |
| T40 | Dickes des elektrischen Leiters |
| 41 | elektrische Stromversorgung |
| 42 | erste Leiterkontaktstelle |
| 44 | zweite Leiterkontaktstelle |
| 46 | erster Stromversorgungsleiter |
| 48 | zweiter Stromversorgungsleiter |
| 51 | erster Ladungsableiter |
| 51' | erster Spannungsableiter |
| 52 | zweiter Ladungsableiter |
| 52' | zweiter Spannungsableiter |
| 63 | erster Ladungseingangskontakt |
| 63' | erster Spannungseingangskontakt |
| 64 | Massepotential |
| 65 | zweiter Ladungseingangskontakt |
| 65' | zweiter Spannungseingangskontakt |
| 66 | erster Signalausgangskontakt |
| 66' | zweiter Signalausgangskontakt |
| 67 | erster Massepotentialausgangskontakt |
| 67' | zweiter Massepotentialausgangskontakt |
| 71 | erster Signalleiter |
| 71' | zweiter Signalleiter |
| 72 | erster Massepotentialleiter |
| 72' | zweiter Massepotentialleiter |
| 73 | Schnittstelle |
| 74 | Recheneinheit |
| 75 | Eingabeeinheit |
| 76 | Ausgabeeinheit |
| AP | Auswerteprogramm |
| B - B | Schnittverlauf |
| B - B | Schnittverlauf |
| C - C | Schnittverlauf |
| D - D | Schnittverlauf |
| DXY | erster Horizontalabstand |
| DXY' | zweiter Horizontalabstand |
| ΔR | Widerstandsänderung |
| f1 | Eigenfrequenz |
| f* | Messfrequenz |
| I | elektrischer Strom |
| L | lineare Kurve |
| MD | erstes Massepotentialdatenelement |
| MD' | zweites Massepotentialdatenelement |
| MS | erstes Massepotentialsignal |
| MS' | zweites Massepotentialsignal |
| mt | erster Massepotentialzeitpunkt |
| mt' | zweiter Massepotentialzeitpunkt |
| mv | erster Massepotentialbetrag |
| mv' | zweiter Massepotentialbetrag |
| P | Druck |
| P+- | pyroelektrische Ladung |
| P20+ | erste pyroelektrische Ladung |

| P20- | zweite pyroelektrische Ladung |
| p30+ | erste pyroelektrische Ladung |
| P30- | zweite pyroelektrische Ladung |
| PD | Druckdatenelement |
| PDcor | temperaturkorrigiertes Druckdatenelement |
| PS | Drucksignal |
| pt | Druckzeitpunkt |
| pv | Druckbetrag |
| pv* | weiterer Druckbetrag |
| pvcor | temperaturkorrigierter Druckbetrag |
| Q20+ | erste piezoelektrische Ladung |
| Q20- | zweite piezoelektrische Ladung |
| o | Empfindlichkeit |
| T | Temperatur |
| TC | Temperaturkorrektur |
| TCD | Temperaturkorrekturdatenelement |
| TS | Temperatursignal |
| tv | Temperaturbetrag |
| tv* | weiterer Temperaturbetrag |
| tt | Temperaturzeitpunkt |
| U40+, U40- | elektrische Spannung |
| X | Horizontalachse |
| XY | Horizontalebene |
| Y | Schrägachse |
| Z | Vertikalachse |

**Patentansprüche**

1. Sensorvorrichtung (1) eingerichtet zur Messung eines Druckes (P); mit mindestens einem Grundkörper (10) und mindestens einem Sensormaterial (20); welcher Grundkörper (10) bereichsweise als Grundkörpermembran (11) ausgeformt ist, welche Grundkörpermembran (11) eingerichtet ist, den zu messenden Druck (P) aufzunehmen und welche Grundkörpermembran (11) unter der Wirkung des Druckes (P) auslenkbar ist; **dadurch gekennzeichnet, dass** das Sensormaterial (20) bereichsweise auf der Grundkörpermembran (11) angeordnet ist, welches Sensormaterial (20) durch die Auslenkung der Grundkörpermembran (11) piezoelektrische Ladung (Q20+, Q20-) erzeugt und eine Menge der erzeugten piezoelektrischen Ladung (Q20+, Q20-) proportional zur Grösse des gemessenen Druckes (P) ist; dass die Sensorvorrichtung (1) auch zur Messung einer Temperatur (T) eingerichtet ist und dafür mindestens einen elektrischen Leiter (40) aufweist, welcher elektrische Leiter (40) auf dem Grundkörper (10) angeordnet ist; und dass die zu messende Temperatur (T) eine Widerstandsänderung ($\Delta$R) des elektrischen Leiters (40) bewirkt, welche Widerstandsänderung ($\Delta$R) proportional zur Grösse der gemessenen Temperatur (T) ist.

2. Sensorvorrichtung (1) gemäss Anspruch 1, **dadurch gekennzeichnet, dass** die Sensorvorrichtung (1) mindestens eine elektrische Stromversorgung (41) aufweist, welche elektrische Stromversorgung (41) einen elektrischen Gleichstrom (I) bereitstellt; dass die elektrische Stromversorgung (41) mit dem elektrischen Leiter (40) elektrisch kontaktiert ist und der elektrische Gleichstrom (I) durch den elektrischen Leiter (40) fliesst; und dass aus der Widerstandsänderung ($\Delta$R) des elektrischen Leiters (40) und dem elektrischen Gleichstrom (I) eine elektrische Spannung (U40+, U40-) resultiert und eine Grösse der elektrischen Spannung (U40+, U40-) proportional zur Grösse der gemessenen Temperatur (T) ist.

3. Sensorvorrichtung (1) gemäss einem der Ansprüche 1 oder 2, **dadurch gekennzeichnet, dass** die Grundkörpermembran (11) entlang einer Vertikalachse (Z) eine Dicke (T11) und in einer Horizontalebene (XY) senkrecht dazu einen Durchmesser (D11) aufweist; dass die Dicke (T11) der Grundkörpermembran (11) kleiner/gleich 20 $\mu$m, vorzugsweise kleiner/gleich 10 $\mu$m, vorzugsweise kleiner/gleich 5 $\mu$m ist; dass der Durchmesser (D11) der Grundkörpermembran (11) kleiner/gleich 300 $\mu$m, vorzugsweise kleiner/gleich 200 $\mu$m, vorzugsweise kleiner/gleich 100 $\mu$m ist; und dass ein Verhältnis von Dicke (T11) zu Durchmesser (D11) der Grundkörpermembran (11) so gewählt ist, dass die Sensorvorrichtung (1) eine Eigenfrequenz (f1) von grösser/gleich 1 MHz aufweist.

4. Sensorvorrichtung (1) gemäss einem der Ansprüche 1 bis 3, **dadurch gekennzeichnet, dass** der elektrische Leiter (40) ausserhalb der Grundkörpermembran (11) angeordnet ist.

5. Sensorvorrichtung (1) gemäss einem der Ansprüche 1 bis 4, **dadurch gekennzeichnet, dass** das der Grundkörper (10) und die Grundkörpermembran (11) aus Silizium bestehen.

6. Sensorvorrichtung (1) gemäss einem der Ansprüche 1 bis 5, **dadurch gekennzeichnet, dass** die Sensorvorrichtung (1) mindestens ein Kompensatormaterial (30) aufweist, welches Kompensatormaterial (30) bereichsweise auf dem Grundkörper (10) angeordnet ist; dass das Sensormaterial (20) unter der Wirkung einer Temperaturänderung ($\Delta T$) pyroelektrische Ladung (P20+, P20-) erzeugt; dass das Kompensatormaterial (30) unter der Wirkung einer Temperaturänderung ($\Delta T$) pyroelektrische Ladung (P30+, P30-) erzeugt; und dass die vom Kompensationsmaterial (30) erzeugte pyroelektrische Ladung (P30+, P30-) die vom Sensormaterial (20) erzeugte pyroelektrische Ladung (P20+, P20-) kompensiert.

7. Sensorvorrichtung (1) gemäss Anspruch 6, **dadurch gekennzeichnet, dass** das Kompensatormaterial (30) ausserhalb der Grundkörpermembran (11) angeordnet ist.

8. Sensorvorrichtung (1) gemäss einem der Ansprüche 6 oder 7, **dadurch gekennzeichnet, dass** das Sensormaterial (20 die piezoelektrische Ladung (Q20+, Q20-) und die pyroelektrische Ladung (P20+, P20-) auf mehreren Oberflächen erzeugt; dass die Sensorvorrichtung (1) mehrere Sensorelektroden (21, 23) aufweist, welche Sensorelektroden (21, 23) auf den Oberflächen des Sensormaterials (20) angeordnet sind und die piezoelektrische Ladung (Q20+, Q20-) und die pyroelektrische Ladung (P20+, P20-) abgreifen; und dass die Grundkörpermembran (11), das auf der Grundkörpermembran (11) angeordnete Sensormaterial (20) und die auf den Oberflächen des Sensormaterials (20) angeordneten Sensorelektroden (21, 23) einen Drucksensor (1P) bilden; dass das Kompensatormaterial (30) die pyroelektrische Ladung (P20+, P20-) auf mehreren Oberflächen erzeugt; dass die Sensorvorrichtung (1) mehrere Kompensatorelektroden (31, 33) aufweist, welche Kompensatorelektroden (31, 33) auf den Oberflächen des Kompensatormaterials (30) angeordnet sind und die pyroelektrische Ladung (K30+, K30-) abgreifen; und dass der Bereich des Grundkörpers (10), in dem sich das Kompensatormaterial (30) befindet, das auf dem Grundkörper (10) angeordnete Kompensatormaterial (30) und die auf den Oberflächen des Kompensatormaterials (30) angeordneten Kompensatorelektroden (31, 33) einen Kompensator (1K) bilden.

9. Sensorvorrichtung (1) gemäss einem der Ansprüche 1 bis 8, **dadurch gekennzeichnet, dass** im Grundkörper (10) bereichsweise eine Mehrzahl von Grundkörpermembrane (11) ausgeformt ist; dass jede der Mehrzahl von Grundkörpermembrane (11) eingerichtet ist, den zu messenden Druck (P) aufzunehmen; welcher Druck (P) die Mehrzahl von Grundkörpermembrane (11) auslenkt; dass auf jeder der Mehrzahl von Grundkörpermembrane (11) Sensormaterial (20) auf der vorderen Oberfläche (F11) der Grundkörpermembran (11) angeordnet ist, welches Sensormaterial (20) durch die Auslenkung der Grundkörpermembran (11) piezoelektrische Ladung (Q20+, Q20-) erzeugt; dass auf jeder der Mehrzahl von Grundkörpermembrane (11) mehrere Sensorelektroden (21, 23) auf den Oberflächen des Sensormaterials (20) angeordnet sind und die piezoelektrische Ladung (Q20+, Q20-) abgreifen; und dass die Sensorvorrichtung (1) mehrere Sensorgruppenleiter (25, 27) aufweist, über welche Sensorgruppenleiter (25, 27) die Sensorelektroden (21, 23) elektrisch in Reihe geschaltet sind.

10. Sensorvorrichtung (1) gemäss Anspruch 9, **dadurch gekennzeichnet, dass** auf dem Grundkörper (10) eine Mehrzahl von Bereichen mit Kompensatormaterial (30) angeordnet ist; dass eine Temperaturänderung ($\Delta T$) gleichermassen auf das Sensormaterial (20) und auf das Kompensatormaterial (30) wirkt und unter der Wirkung der Temperaturänderung ($\Delta T$) sowohl das Sensormaterial (20) pyroelektrische Ladung (P20+, P20-), als auch das Kompensatormaterial (30) pyroelektrische Ladung (P30+, P30-) erzeugt; dass die Sensorelektroden (21, 23) die piezoelektrische Ladung (Q20+, Q20-) und die pyroelektrische Ladung (P20+, P20-) des Sensormaterials (20) abgreifen; dass auf jedem der Mehrzahl der Bereiche mit Kompensatormaterial (30) Kompensatorelektroden (31, 33) auf den Oberflächen des Kompensatormaterials (30) angeordnet sind und die pyroelektrische Ladung (P30+, P30-) des Kompensatormaterials (30) abgreifen; und dass die Sensorvorrichtung (1) mehrere Kompensatorgruppenleiter (35, 37) aufweist, über welche Kompensatorgruppenleiter (25, 27) die Kompensatorelektroden (31, 33) elektrisch in Reihe geschaltet sind.

11. Sensorvorrichtung (1) gemäss einem der Ansprüche 6 oder 10, **dadurch gekennzeichnet, dass** die piezoelektrische Ladung (Q20+, Q20-) des Sensormaterials (20) erste piezoelektrische Ladung (Q20+) und zweite piezoelektrische Ladung (Q20-) umfasst; dass die pyroelektrische Ladung (P20+, P20-) des Sensormaterials (20) erste pyroelektrische Ladung (P20+) und zweite pyroelektrische Ladung (P20-) umfasst; dass die Sensorelektroden (21, 23) eine erste Sensorelektrode (21) und eine zweite Sensorelektrode (23) umfassen; dass die erste Sensorelektrode (21) die erste piezoelektrische Ladung (Q20+) und die erste pyroelektrische Ladung (P20+) des Sensormaterials (20) abgreift; dass die zweite Sensorelektrode (23) die zweite piezoelektrische Ladung (Q20-) und die zweite pyroe-

**EP 4 756 396 A1**

lektrische Ladung (P20-) des Sensormaterials (20) abgreift; dass die pyroelektrische Ladung (P30+, P30-) des Kompensatormaterials (30) erste pyroelektrische Ladung (P30+) und zweite pyroelektrische Ladung (P30-) umfasst; dass die Kompensatorelektroden (31, 33) eine erste Kompensatorelektrode (31) und eine zweite Kompensatorelektrode (33) umfassen; dass die erste Kompensatorelektrode (31) die erste pyroelektrische Ladung (P30+) des Kompensatormaterials (30) abgreift; dass die zweite Kompensatorelektrode (33) die zweite pyroelektrische Ladung (P30-) de Kompensatormaterials (30) abgreift; dass die Sensorvorrichtung (1) mindestens eine Ableitung (5) aufweist, welche Ableitung (5) einen ersten Ladungsableiter (51) und einen zweiten Ladungsableiter (52) aufweist; dass der erste Ladungsableiter (51) elektrisch mit der ersten Sensorelektrode (21) und mit der zweiten Kompensatorelektrode (33) kontaktiert ist und am ersten Ladungsableiter (51) erste piezoelektrische Ladung (Q20+) und erste pyroelektrische Ladung (P20+) des Sensormaterials (20) und zweite pyroelektrische Ladung (P30-) des Kompensatormaterials (30) anliegt; dass die Menge der ersten pyroelektrischen Ladung (P20+) des Sensormaterials (20) gleich der Menge der zweiten pyroelektrischen Ladung (P30-) des Kompensatormaterials (30) ist und sich die pyroelektrischen Ladung (P20+, P30-) am ersten Ladungsableiter 51 kompensiert; und dass der zweite Ladungsableiter (52) elektrisch mit der zweiten Sensorelektrode (23) und mit der ersten Kompensatorelektrode (31) kontaktiert ist und am zweiten Ladungsableiter (52) zweite piezoelektrische Ladung (Q20-) und zweite pyroelektrische Ladung (P20-) des Sensormaterials (20) und erste pyroelektrische Ladung (P30+) des Kompensatormaterials (30) anliegt; dass die Menge der zweiten pyroelektrischen Ladung (P20-) des Sensormaterials (20) gleich der Menge der ersten pyroelektrischen Ladung (P30+) des Kompensatormaterials (30) ist und sich die pyroelektrischen Ladung (P20-, P30+) am zweiten Ladungsableiter 51 kompensiert.

12. Sensorvorrichtung (1) gemäss Anspruch 2, **dadurch gekennzeichnet, dass** die piezoelektrische Ladung (Q20+, Q20-) des Sensormaterials (20) erste piezoelektrische Ladung (Q20+) umfasst; dass die elektrische Spannung (U40+, U40-) des elektrischen Leiters (40) erste elektrische Spannung (U40+) umfasst; dass die Sensorvorrichtung (1) mindestens eine Schnittstelle (73) aufweist; dass die Schnittstelle (73) eingerichtet ist, ein der ersten piezoelektrischen Ladung (Q20+) entsprechendes Drucksignal (PS) in ein Druckdatenelement (PD) mit einem Druckbetrag (pv) zu digitalisieren; dass die Schnittstelle (73) eingerichtet ist, das Druckdatenelement (PD) mit einem assoziierten Druckzeitpunkt (pt) zu versehen, dass die Schnittstelle (73) eingerichtet ist, ein der ersten elektrischen Spannung (U40+) entsprechendes Temperatursignal (TS) in ein Temperaturdatenelement (TD) mit einem Temperaturbetrag (tv) zu digitalisieren; und dass die Schnittstelle (73) eingerichtet ist, das Temperaturdatenelement (TD) mit einem assoziierten Temperaturzeitpunkt (tt) zu versehen.

13. Sensorvorrichtung (1) gemäss Anspruch 12, **dadurch gekennzeichnet, dass** die Sensorvorrichtung (1) mindestens eine Recheneinheit (74) aufweist, welche Recheneinheit (74) mindestens einen Datenspeicher und mindestens einen Datenprozessor aufweist; dass die Recheneinheit (74) mindestens ein Auswerteprogramm (AP) aufweist, welches Auswerteprogramm (AP) im Datenspeicher gespeichert und in den Datenprozessor ladbar ist; und dass das in den Datenprozessor geladene Auswerteprogramm (AP) eingerichtet ist, die Druckdatenelemente (PD) und die Temperaturdatenelemente (TD) sowie die mit den Druckdatenelementen (PD) assoziierten Druckzeitpunkte (pt) und die mit den Temperaturdatenelementen (TD) assoziierten Temperaturzeitpunkte (tt) einzulesen.

14. Sensorvorrichtung (1) gemäss Anspruch 13, **dadurch gekennzeichnet, dass** das in den Datenprozessor geladene Auswerteprogramm (AP) eingerichtet ist, ein Druckdatenelement (PD), dessen assoziierter Druckzeitpunkt (pt) gleich dem mit dem Temperaturdatenelement (TD) assoziierten Temperaturzeitpunkt (tt) ist, mit diesem Temperaturdatenelement (TD) zu kombinieren.

15. Sensorvorrichtung (1) gemäss Anspruch 14, **dadurch gekennzeichnet, dass** die Recheneinheit (74) mindestens ein Temperaturkorrekturdatenelement (TCD) aufweist, welches Temperaturkorrekturdatenelement (TCD) im Datenspeicher gespeichert ist, welches Temperaturkorrekturdatenelement (TCD) einen weiteren Druckbetrag (tv*) und einen dem weiteren Druckbetrag (pv*) zugeordneten weiteren Temperaturbetrag (tv*) aufweist; dass das in den Datenprozessor geladene Auswerteprogramm (AP) eingerichtet ist, das Temperaturkorrekturdatenelement (TCD) einzulesen; dass das in den Datenprozessor geladene Auswerteprogramm (AP) eingerichtet ist, ein Temperaturkorrekturdatenelement (TCD) zu identifizieren, dessen zugeordneter weiterer Temperaturbetrag (tv*) gleich dem Temperaturbetrag (tv) des kombinierten Temperaturdatenelements (TD) ist; und dass das in den Datenprozessor geladene Auswerteprogramm (AP) eingerichtet ist, den weiteren Druckbetrag (pv*) des identifizierten Temperaturkorrekturdatenelements (TCD) vom Druckbetrag (pv) des damit kombinierten Druckdatenelements (PD) zu subtrahieren, durch die Subtraktion wird eine temperaturabhängigen Nichtlinearität der Empfindlichkeit ($\sigma$) im Druckbetrag (pv) des Druckdatenelements (PD) korrigiert.

Fig. 1

Fig. 2

Fig. 3

Fig. 4

Fig. 5

D - D

1T

ΔR

40

42, 44

T40

14

15

13

10

T

σ, f1

Fig. 6

EP 4 756 396 A1

Fig. 7

Fig. 8

P+-

1P, 1K

P20+, P30+, P20-, P30-

ΔT

T

**Fig. 9**

Q20+, Q20-

1P

L

TC

σ

T

**Fig. 10**

Fig. 11

28

Fig. 12

Fig. 13

EP 4 756 396 A1

Fig. 14

EP 4 756 396 A1

Fig. 15

Europäisches
Patentamt

European
Patent Office

Office européen
des brevets

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 537 129 B1 (ST MICROELECTRONICS SRL [IT]) 14. April 2021 (2021-04-14) | 1-3,5-8, 11-15 | INV. G01L9/00 |
| A | * Absatz [0001]; Abbildungen 1-5 * <br> * Absatz [0008] - Absatz [0055] * <br>----- | 4,9,10 | G01L9/08 <br> G01L19/00 <br> G01L19/04 |
| X | US 4 577 510 A (BUR ANTHONY J [US] ET AL) 25. März 1986 (1986-03-25) | 1 | G01L23/10 |
| A | * Spalte 1, Zeile 11 - Spalte 1, Zeile 16; Abbildungen 1-2 * <br> * Spalte 2, Zeile 23 - Spalte 6, Zeile 5 * <br>----- | 2-15 | |
| A | EP 1 797 603 B1 (PIEZOCRYST ADVANCED SENSORICS [AT]) 5. August 2009 (2009-08-05) <br> * Absatz [0001] - Absatz [0018]; Abbildungen 1-2 * <br> * Absatz [0024] - Absatz [0033] * <br>----- | 6-8,10, 11 | |
| A | EP 0 055 345 A1 (SIEMENS AG [DE]) 7. Juli 1982 (1982-07-07) <br> * Seite 1, Zeile 6 - Seite 1, Zeile 12; Abbildungen 3-6 * <br> * Seite 2, Zeile 11 - Seite 2, Zeile 24 * <br> * Seite 6, Zeile 16 - Seite 8, Zeile 36 * <br>----- | 6-8,10, 11 | |
| A | US 10 852 207 B2 (QZ CORP [JP]) 1. Dezember 2020 (2020-12-01) <br> * Spalte 1, Zeile 15 - Spalte 1, Zeile 43; Abbildung 1 * <br> * Spalte 4, Zeile 48 - Spalte 6, Zeile 43 * <br>----- | 1-15 | |
| A | EP 2 504 679 B1 (KISTLER HOLDING AG [CH]) 2. Januar 2019 (2019-01-02) <br> * Absatz [0001]; Abbildungen 2-5 * <br> * Absatz [0015] - Absatz [0028] * <br>----- | 1-15 | |

**RECHERCHIERTE SACHGEBIETE (IPC)**

G01L

Der vorliegende Recherchenbericht wurde für alle Patentansprüche erstellt

| Recherchenort | Abschlußdatum der Recherche | Prüfer |
|---|---|---|
| Den Haag | 5. Februar 2026 | Foster, Keir |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 25 21 7015

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2026

| Im Recherchenbericht angeführtes Patentdokument | | | Datum der Veröffentlichung | Mitglied(er) der Patentfamilie | | Datum der Veröffentlichung |
|---|---|---|---|---|---|---|
| EP 3537129 | B1 | | 14-04-2021 | CN | 110174198 A | 27-08-2019 |
| | | | | CN | 209673267 U | 22-11-2019 |
| | | | | EP | 3537129 A2 | 11-09-2019 |
| | | | | US | 2019257703 A1 | 22-08-2019 |
| | | | | US | 2020408621 A1 | 31-12-2020 |
| US 4577510 | A | | 25-03-1986 | KEINE | | |
| EP 1797603 | B1 | | 05-08-2009 | AT | 500829 A1 | 15-04-2006 |
| | | | | AT | E438932 T1 | 15-08-2009 |
| | | | | DE | 202005021706 U1 | 02-07-2009 |
| | | | | EP | 1797603 A1 | 20-06-2007 |
| | | | | JP | 5139803 B2 | 06-02-2013 |
| | | | | JP | 2008516202 A | 15-05-2008 |
| | | | | US | 2007283769 A1 | 13-12-2007 |
| | | | | WO | 2006037145 A1 | 13-04-2006 |
| EP 0055345 | A1 | | 07-07-1982 | AT | E19303 T1 | 15-05-1986 |
| | | | | DE | 3049347 A1 | 29-07-1982 |
| | | | | EP | 0055345 A1 | 07-07-1982 |
| US 10852207 | B2 | | 01-12-2020 | CN | 109618558 A | 12-04-2019 |
| | | | | EP | 3567355 A1 | 13-11-2019 |
| | | | | JP | 6744636 B2 | 19-08-2020 |
| | | | | JP | 2017125850 A | 20-07-2017 |
| | | | | JP | WO2018127987 A1 | 07-11-2019 |
| | | | | KR | 20190053817 A | 20-05-2019 |
| | | | | US | 2019107458 A1 | 11-04-2019 |
| | | | | WO | 2018127987 A1 | 12-07-2018 |
| EP 2504679 | B1 | | 02-01-2019 | CH | 702257 A1 | 31-05-2011 |
| | | | | CN | 102667436 A | 12-09-2012 |
| | | | | EP | 2504679 A1 | 03-10-2012 |
| | | | | HU | E043918 T2 | 30-09-2019 |
| | | | | JP | 5631409 B2 | 26-11-2014 |
| | | | | JP | 2013512417 A | 11-04-2013 |
| | | | | US | 2012266683 A1 | 25-10-2012 |
| | | | | WO | 2011063537 A1 | 03-06-2011 |

EPO FORM P0461

Für nähere Einzelheiten zu diesem Anhang : siehe Amtsblatt des Europäischen Patentamts, Nr.12/82